# EUROPÄISCHE PATENTSCHRIFT

(11) **EP 4 278 225 B1**
(45) Veröffentlichungstag und Bekanntmachung des Hinweises auf die Patenterteilung: **22.05.2024**
(21) Anmeldenummer: 22708729.3
(22) Anmeldetag: 02.03.2022
(51) Int. Cl.: G02B 19/00, F21V 5/04, G08G 1/095, G02B 27/09

(54) **REFLEXFREIE SIGNALOPTIK**
GLARE-FREE OPTICAL SIGNAL ELEMENT
ÉLÉMENT DE SIGNAL OPTIQUE SANS ÉBLOUISSEMENT

(30) Priorität: 03.03.2021 AT 501512021
(43) Veröffentlichungstag der Anmeldung: 22.11.2023
(73) Patentinhaber: Dr. Techn. Josef Zelisko Fabrik für Elektrotechnik u. Maschinenbau Gesellschaft m.b.H., 2340 Mödling (AT)
(72) Erfinder: OTTO, Alexander, 2013 Göllersdorf (AT); SCHLAGER, Peter, 3204 Kirchberg a.d. Pielach (AT)
(74) Vertreter: Patentanwälte Barger, Piso & Partner
(86) Internationale Anmeldenummer: PCT/AT2022/060059
(87) Internationale Veröffentlichungsnummer: WO 2022/183230

(56) Entgegenhaltungen:
- EP-A2- 1 107 210
- WO-A1-2018/004534
- US-A1- 2016 215 957
- US-B2- 6 509 840
- US-B2- 9 581 308

## Beschreibung

Die Erfindung betrifft Signalleuchten gemäß dem Oberbegriff von Anspruch 1.

Signalleuchten sollen klare Aussagen über ihren Zustand erlauben, also eine eindeutige Feststellung, ob sie ein- oder ausgeschaltet sind und welche Lichtfarbe abgestrahlt wird, um keine Zweifel an der beabsichtigten Verkehrssteuerung aufkommen zu lassen. Hierzu sind ihre Eigenschaften und Schaltvorrichtungen zahlreichen Normen und Sicherheitsanforderungen unterworfen. Diese beziehen sich auf ihre Helligkeit und Sichtbarkeit je nach Einsatzfall, aber auch ihre Funktionsüberwachung sowie auf die funktionale interne Überwachung der Steuergeräte bezüglich des Auftretens von falschen oder konkurrierenden Signalkonstellationen. Während die technische Funktionalität und Ausgestaltung solcher Ansteuerungen schon lange zur vollen Zufriedenheit umgesetzt wird, ist die für die Sicherheit essentielle Erkennbarkeit der Signalisation durch Verkehrsteilnehmer oftmals weniger beachtet. Hierbei spielt insbesondere die Sonne eine wesentliche Rolle, da sie mit ihrer gegenüber der Signalleuchte wesentlich größeren Helligkeit auf unterschiedliche Weisen für erhebliche Beeinträchtigungen der Erkennbarkeit sorgt. Es existiert eine große Zahl von Gestaltungsvorschlägen lichttechnischer Verbesserungen aller Art, welche zumeist eine Verteuerung der Signale zur Folge haben und deshalb nur teilweise, in Fällen besonderer Beeinträchtigung, optional zum Einsatz kommen. Dazu zählen etwa überlange Sonnenblenden, Lamellengitter, Waben oder Linsen-Einfärbungen.

Seit LEDs als Lichtquellen Einzug in Signale gehalten haben, mussten die optischen Systeme einer Überarbeitung unterworfen werden. Insbesondere wurden die Straßensignale von Reflektor-Systemen auf Sammellinsen-Systeme umgestellt, welche sowohl der Lichtabstrahlung von handelsüblichen LEDs als auch der Verbesserung der Erkennbarkeit entgegenkommen. Während die LED als elektronische Komponente das Entwickeln von elektronischen Spannungsversorgungen, energiesparenden Versorgungssystemen, Funktionsüberwachung und Kommunikationsmöglichkeiten benötigt, ermöglicht und nahegelegt hat, sind weiterführende optische Modifikationen unterblieben, um die Austauschbarkeit und Kompatibilität zu bisherigen Bauweisen und zum bisherigen Erscheinungsbild zu wahren. Bei Eisenbahnsignalen ergab sich durch die Einführung von LEDs als Lichtquelle jedoch in manchen Belangen eine deutliche Verschlechterung der bisherigen Eigenschaften.

Der elektronische Betrieb dieser Signale auf der höchsten Sicherheitsstufe SIL-4 stellt einen erheblichen Aufwand dar. Eine besondere Herausforderung in Zusammenhang mit der SIL-4-Anforderung ist die Weiterverwendung bisheriger Sicherheitsvorrichtungen bei einer Umstellung von Glühlampensignalen auf LEDs. Die Weiterentwicklung der LEDs erlaubt mittlerweile Ausführungen als zentrale Lichtquelle. Dabei werden wenige handelsübliche LEDs in dichter Anordnung verwendet, wodurch die Nachahmung des bisherigen Glühfadens und der Einsatz altbekannter optischer Systeme wieder möglich sind, da nur zentrale Lichtquellen die Möglichkeit bieten, ausgefallene einzelne LEDs visuell unkenntlich zu halten und bei unverändertem Fortbetrieb als Störungsfall zu melden.

Bahnsignale unterliegen bis auf ihre Lichtfarbe keiner besonderen lichttechnischen Normung. Sie wurden nach physikalischen Grundlagen entwickelt, ihre Helligkeit und Lichtverteilung ist in fast jedem Land individuell nach vorhandener Tradition vorgegeben, und oftmals nicht von Bahnverwaltungen, sondern von Infrastruktur-Ausstattern ausgewählt, sodass kaum Unterlagen dazu existieren. Dabei ist gerade im Bahnbereich das richtige Erkennen des Signals unumgänglich, denn oft besteht, anders als im Straßenverkehr, keine Redundanz durch weitere Signale an anderen Positionen. Eine einzige Fehldeutung durch den Lokführer kann daher verheerende Folgen haben. Deswegen besteht bei Bahnsignalen schon lange ein erweitertes Verständnis bezüglich der eindeutigen Erkennbarkeit der Signalisation unter allen Witterungseinflüssen und örtlichen Gegebenheiten. Wichtig für das Erkennen auf große Entfernungen ist eine hohe Helligkeit, enge Lichtbündelung und genaue Ausrichtung des Signals. Weiters ist es im Fall des Anhaltens vor dem Signal wichtig die Signalisierung von der Seite oder von unten erkennen zu können, was eine bestimmte Nahfeld-Lichtverteilung erfordert.

Neben der allgemeinen Erkennbarkeit der Signale ist eine Berücksichtigung der Sonne wichtig, da sie den größten Störfaktor bei der deutlichen Erkennbarkeit der Signalstellung darstellt. Gegen die Blendung durch die genau hinter einem Signal stehende Sonne helfen Kontrastblenden, auch als Signalschilder bezeichnet, welche das Signal besser gegen die Umgebungshelligkeit abheben und den direkten Blick in die Sonne erst neben dem Schild in einem gewissen Abstand zum Signal frei gibt. Gegen diese Störung hilft in weiterer Folge eine einstellbare Sonnenblende im Zugriff des Lokführers. Zur Abhaltung der Sonne von der Signalleuchte selbst werden meistens überlange Sonnenblenden um die Signalleuchten herum montiert. Ein annähernd axiales Hineinleuchten der Sonne in das Signal kann dadurch aber nicht verhindert werden. Wenn die Sonne jedoch direkt in die Signalleuchte hineinleuchtet kann das ein sogenanntes Phantomlicht erzeugen. Dieses Phantomlicht kann die Erkennbarkeit der Signalisation für den Lokführer, trotz bester Sicht auf die Signalleuchte und der Sonne im Rücken, erschweren oder sogar verhindern, was entsprechend problematisch ist.

Es lassen sich drei Arten von Phantomlicht unterscheiden:
1. Echtes Phantomlicht
2. Streu-Phantomlicht
3. Reflex-Phantomlicht

Echtes Phantomlicht entsteht durch in das Signal einfallendes Sonnenlicht, das durch die optischen Bauteile bis zur Lichtquelle gelangt und von dieser selbst (Glühfaden oder LED-Oberfläche) reflektiert wird. Da dieses Licht genau den gleichen Weg durch das optische System nimmt wie das von der Lichtquelle selbst erzeugte Licht, ist es vom Signallicht nicht ohne weiteres unterscheid- oder separierbar.

Streu-Phantomlicht entsteht durch die Summe aller ins Signal gelangten Lichtstrahlen, wie auch Umgebungshelligkeit. Diese werden an allen vorhandenen Oberflächen und Materialien, insbesondere durch Poliermängel oder Materialeinschlüsse, gestreut, reflektiert oder nur teilabsorbiert und erzeugen ein allgemeines, diffuses Lichtniveau im Signal und allen seinen Linsen. Dabei fällt auch ein gewisser Anteil auf die Lichtquelle und steuert damit auch einen Teil zum echten Phantomlicht bei. Deshalb werden schon sehr lange alle innenliegenden Flächen in der Signalleuchte, welche keine lichtlenkenden Aufgaben haben, schwarzmatt gefärbt und manchmal zusätzlich mit absorbierenden Strukturen versehen, um möglichst alle eindringenden Lichtstrahlen frühzeitig zu absorbieren und das interne Lichtniveau möglichst niedrig zu halten.

Reflex-Phantomlicht entsteht an allen von der Sonne erreichbaren optischen Oberflächen der Signaloptik gemäß den Snellius'schen Formeln. Es hängt vom Auftreffwinkel und dem Brechungsindex der Linsen ab. Dieses Reflexlicht wird durch Brechung, Weiterleitung und Absorption modifiziert und abgelenkt, wobei ein gewisser Anteil in Richtung des Beobachters zurück strahlt. Das geschieht entweder direkt durch Reflexion an der Lichtaustrittsfläche oder indirekt an durch Reflexion den innenliegenden Linsenflächen der Signalleuchte. Reflexionen bilden einen wesentlichen Anteil am Gesamt-Phantomlicht. Sie treten über einen großen Bereich und auch bei nahezu voller Sonnenintensität auf und verlangen daher nach entsprechender Berücksichtigung. Das reflektierte Sonnenlicht überlagert sich mit dem Signallicht, wodurch die Signalfarbe verfälscht und ausgewaschen erscheinen kann. Das wiederum kann zu Fehlinterpretationen des Signals führen. Eine Sonnenblende kann die Ausbildung des Reflexes tagsüber vermeiden, versagt aber bei niedrigem Sonnenstand. Eine Reduktion oder gar Verhinderung von Reflexionen stellt daher einen erheblichen sicherheitstechnischen Vorteil dar.

Bei Reflexlicht einer optischen Fläche werden auftreffende Lichtstrahlen als Eltern oder erste Generation, die reflektierten Anteile als Kind- oder zweite Generation bezeichnet. Treffen diese wieder auf eine optische Fläche, entstehen wiederum Reflexe, die als Enkel- oder dritte Generation bezeichnet werden und so fort. Die Qualität einer Reflex-Beseitigung steigt, wenn es gelingt, nicht nur Lichtstrahlen der zweiten Generation vom Beobachtungsbereich fern zu halten, sondern möglichst auch Anteile weiterer Generationen. Darüber hinaus gibt es in fast jeder Linse auch unvermeidliche Verbindungsflächen zwischen den optisch wirksamen Flächen, die ebenso in die Reflex-Simulationen einbezogen werden sollen, um ihre Orientierung zu optimieren.

Eine bekannte Lösung ist die stärkere Krümmung der Frontscheiben und Frontlinsen, um die unvermeidlichen Reflexe in einen großen Bereich abzustrahlen und so auf ein niedrigeres Niveau abzusenken. Nachteilig an dieser Lösung ist, dass die Sonne weiterhin als heller, störender Reflex am Signal sichtbar bleibt.

Eine weitere bekannte Lösung ist das nach unten Neigen der Frontscheibe einer Signalleuchte um wenige Grad, um hierdurch den Sonnenreflex ebenfalls nach unten zu lenken, so dass dieser aus der Ferne nicht sichtbar ist. Nachteilig an dieser Lösung ist, dass der Reflex aus der Nähe im Vergleich sogar intensiver wirken kann.

Auch ist es bekannt, die Frontscheibe nach oben zu neigen und zusammen mit einer sehr langen Sonnenblende die Sonnenreflexe zu unterdrücken, indem die Sonne entweder durch die Sonnenblende vom Signal völlig abgeschirmt wird, ober bei niedrigem Sonnenstand die Reflexe nach oben in die Sonnenblende gelenkt werden. Nachteilig daran ist, dass eine solche Bauweise besonders verschmutzungsgefährdet und wartungsunfreundlich und die Signalisierung aus der Nähe von unten praktisch nicht erkennbar ist.

Ebenso wird Phantomlicht durch das Vermeiden von Reflektoren innerhalb des Signals verringert. Das von der signalinternen Lichtquelle abgestrahlte Licht wird dabei durch sogenannte Kondensorlinsen gebündelt, wobei nur der nach vorne abstrahlende Lichtanteil verwendet wird. Das kommt den Eigenschaften einer modernen LED-Lichtquelle besonders entgegen. Bei Glühlampenlicht war das nach hinten abgestrahlte Licht ungenutzt, um das Phantomlicht niedrig zu halten. Der etwa bei Projektoren übliche sphärische Reflektor hinter der Glühwendel würde auch das eindringende Sonnenlicht einfangen und als sehr intensives Phantomlicht nach vorne abstrahlen, da Reflektor-Spiegel über 90% des auftreffenden Lichts zurückwerfen, Linsen-Oberflächen hingegen material- und winkelabhängig nur etwa 5% des auftreffenden Lichts reflektieren.

Zur Vermeidung von echtem Phantomlicht ist ein übereinstimmender Lichtpfad von LED-Licht und Sonnenlicht im System so gut als möglich zu vermeiden. Das LED-Licht darf daher nicht unter einem Aufwärtswinkel austreten, da dort die Sonne stehen kann. Steht die Sonne oberhalb des Horizonts, trifft das eingedrungene Sonnenlicht immer unterhalb der Lichtquelle auf, sofern eine hohe Präzision in der Linsengestaltung und Herstellung vorhanden ist, und muss dort weggelenkt oder absorbiert werden. Als Bauform für Kondensorlinsen sind massive Kollimatoren aus Glas sowie Fresnel-Bauweisen aus Glas und Kunststoff bekannt. Fresnel-Linsen zeichnen sich gegenüber Kondensorlinsen dadurch aus, dass sie Material und Gewicht, und damit Kosten sparen. Die lichtfokussierende Wirkung entsteht nicht durch eine einzige stark gekrümmte Oberfläche, sondern durch deren Zerlegung in einzelne konzentrisch angeordnete Ringe mit der für ihren jeweiligen Durchmesser notwendigen Brechkraft. In beiden Fällen ist die Geometrie der Kondensorlinsen rotationssymmetrisch bezüglich der optischen Achse der Lichtquelle bzw. ihres Lichtaustritts. Oft sind bei Glühlampen-Bahnsignalen auch zwei Fresnel-Linsen hintereinander angeordnet, um etwas mehr Nutzlicht einfangen zu können.

Im praktischen Einsatz erscheinen aus der Ferne alle Reflexionen mit dem Signallicht vermischt, das Auge kann die starken Farb- und Helligkeitsunterschiede nicht weiter auflösen. Es wird nur noch ein fehlfarbiger Lichtpunkt erkannt, der erst zusammen mit allfälligen weiteren Lichtpunkten in seiner Bedeutung gedanklich analysiert werden muss. Sollen alle störenden Reflexionen vermieden werden, so ist zu allererst der Beobachtungsbereich der Signalleuchten genauer zu ermitteln und festzulegen. Dieser ist oft erheblich größer, als der direkte axiale Draufblick erwarten lässt. Insbesondere wenn ein Beobachter während der Annäherung zunehmend auf seitliche Blicke und von unten aus geringer Entfernung auf das Beobachten und Erkennen der Signalleuchte angewiesen ist. Die Signalleuchte kann nur dann als eingeschaltet erkannt werden, wenn sie auch Licht in ausreichender Menge zum Beobachter hin abstrahlt. Der Beobachtungsbereich ist vom Einsatzgebiet, der Situationsgeometrie und dem Nutzungsverhalten abhängig und ist in den jeweiligen Anforderungsvorgaben oder Normen festgelegt oder daraus berechenbar, wie auch der Verlauf der Lichtintensität aus der anzunehmenden möglichen Entfernung des Beobachters in der jeweiligen Blickrichtung. Hierbei kann es durchaus sein, einen vorgegebenen Mindestbereich aus praktisch-qualitativen Erwägungen noch zu erweitern. Alle diese Beobachtungspositionen und dafür benötigten Lichtstärken ergeben in Summe eine bestimmte Vorgabe-Lichtverteilung für das Signal, welche mindestens erreicht werden muss. Dazu kommen prozentuelle Zuschläge für Verschmutzung, Alterung und Schlechtwetter.

Als Beispiel für den Stand der Technik kommt die EP 3 051 517 A1 in Betracht. Sie zeigt ein Lichtsignal zur Verwendung in einer Verkehrsampel (vgl. [0005]). Diese Verkehrsampel nutzt gekrümmte Linsenscheiben, um reflektiertes Sonnenlicht aufzustreuen. Dieses bleibt aber in reduzierter Helligkeit zu einem großen Teil im Beobachtungsbereich und erscheint dem Beobachter als heller Glanzpunkt und partielles Aufleuchten der Fresnel- und Streustruktur. Das Problem wird damit nicht zufriedenstellend gelöst.

Weitere Beispiele für den möglichen nächstliegenden Stand der Technik sind die Druckschriften EP 1 107 210 und WO2018/004534. Sie offenbaren den Oberbegriff gemäß Anspruch 1.

Die US 4,962,450 A zeigt ein Signallicht mit einer schräg gestellten Fresnellinse. Umgebungslicht wird dabei entweder direkt in einen Absorberbereich gelenkt, oder durch Spiegel so lange reflektiert, bis es entweder auf den Absorberbereich trifft, oder das Signal wieder verlässt. Hier wird ein Reflektor eines Scheinwerfers oder einer Leuchte so gestaltet, dass absorbierende und spiegelnde Bereiche des Reflektors so angeordnet werden, dass ein Zurückleuchten vermieden wird, indem ein Reflektor sektoriell verspiegelt oder auch durch Anwendung von Totalreflexion partiell spiegelnd ist. Darin liegt ein Problem, da Rückstrahlen über Reflektoren schwer kontrollierbar ist. Auch wenn die D4 sich selbst zum Ziel setzt Phantomlicht zu reduzieren, so kann das höchstens in einem sehr eingeschränkten Bereich der Fall sein. Darüber hinaus ist dieses Konzept nicht sinnvoll mit einer LED-Lichtquelle, da einerseits die Strahlen des Umgebungslichts unmittelbar auf die Linse der LED treffen und andererseits die Stahlen 4 nach hinten Richtung Reflektor laufen. Dieses Konzept ist daher nur für allseitig abstrahlende Glühlampen brauchbar.

Die US 2002/089419 A1 zeigt ein Signallicht für den Straßenverkehr. Darin wird allerdings zur Verringerung von Phantomlicht rein auf die Reflexionseigenschaften der äußeren Abdeckung vertraut, die abgewinkelt wird, um reflektiertes Licht auf den Boden zu lenken. Diese Eigenschaft kann allerdings bei entsprechendem Anstrahlwinkel den Phantomeffekt sogar verstärken.

Die DE 10 2016 124 265 A1 zeigt eine LED-Signalleuchte mit einer massiven Sammellinse mit integriertem Prisma und Streustruktur auf der Austrittsseite. Das Licht wird in einem Lichtleiter-artigen Bauteil vorgebündelt und gemischt und anschließend innerhalb des Signals schräg geführt und über das integrierte Prisma waagrecht gelenkt. Weiters wird eine Haltescheibe genutzt, welche von oberhalb einfallendes Licht wieder nach oben retroreflektiert und somit außerhalb des Beobachtungsbereiches lenkt. Eine Reduktion von Phantomlicht lässt sich bei dieser Ausführung nur in Kombination mit weiteren bekannten Maßnahmen wie Sonnenblenden erreichen. Eine Aufwärtsneigung kann die höherstehende Sonne in die Achsrichtung reflektieren und benötigt immer eine angepasste lange Sonnenblende. Eine geringe Abwärtsneigung kann den Blick eines Beobachters, der das Signal von schräg unten ansieht, nahezu waagrecht direkt in die tiefstehende Sonne lenken, was sich mit Sonnenblenden nicht verhindern lässt. Auch diese Lösung ist daher nicht befriedigend.

Die US 4,152,756 A zeigt eine Bahnübergangsampeln die rein von ihrer Erscheinung an ein Bahnsignal erinnert, optisch/lichttechnisch jedoch nicht mit diesem verwandt ist. Bahnübergangsampeln benötigen sehr viel mehr Licht als Bahnsignal, da sie viel breiter abstrahlen müssen. Bei gleicher Glühlampen-Lichtquelle benötigt das einen Reflektor im Inneren für die Glühlampe, um möglichst viel Licht nutzbar zu machen. Bahnsignale haben keinen Reflektor, sondern Fresnellinsen oder Kollimatoren zur Parallelrichtung. Der Grund dafür besteht darin, dass Reflektoren fast das gesamte ins Signal einfallende Licht reflektieren und als Phantomlicht zurückwerfen würden, was störende Lichtflecken oder Lichtpunkte erzeugen könnte. Fresnellinsen oder Kollimatoren hingegen lassen einfallendes Licht zu einem großen Teil durch. Es fällt dann auf geschwärzte innere Gehäusewände und wird dort absorbiert.

Keine der angeführten Anmeldungen erfüllt daher den Zweck in einem zufriedenstellenden Maß Phantomlicht bei Bahnsignalen zu reduzieren. Es ist Ziel und Aufgabe dieser Erfindung eine Signaloptik zur Verfügung zu stellen, die bei beliebiger Anstrahlung der Frontscheibe durch die Sonne selbst bei niedrigem Sonnenstand wenige bis keine Sonnenlicht-Reflexe im gesamten Beobachtungsbereich erzeugt, welche die Erkennbarkeit beeinträchtigen könnten und dabei auch das Auftreten von echtem Phantomlicht reduziert.

Erfindungsgemäß werden diese Ziele durch eine Signaloptik erreicht, die die im kennzeichnenden Teil des Anspruches 1 angegebenen Merkmale aufweist, indem eine Austrittsoptik geometrisch um einen vertikalen Neigungswinkel schräg verzerrt ist und zumindest eine Sammellinse mit einem Brennpunkt enthält, in welchem die LED-Lichtquelle mit der unmittelbar vorgesetzten LED-Linse angeordnet ist. Die LED-Linse erzeugt dabei einen Lichtverteilungs- und Intensitätsverlauf, welcher die gesamte Austrittsoptik gleichmäßig hell beleuchtet.

Die Erfindung wird nachfolgend anhand der Zeichnungen näher erläutert.
Die Fig. 1 zeigt ein LED-Bahnsignal mit einteiliger Austrittsoptik nach dem Stand der Technik im vertikalen Längsschnitt,
die Fig. 2 zeigt ein Straßensignal mit zweiteiliger Austrittsoptik nach dem Stand der Technik im vertikalen Längsschnitt,
die Fig. 3 zeigt eine erfindungsgemäße Signalleuchte im vertikalen Längsschnitt,
die Fig. 4a zeigt einen typischen Beobachtungsbereich für engbündelnde Bahnsignale,
die Fig. 4b zeigt einen typischen Beobachtungsbereich für breit abstrahlende Straßensignale,
die Fig. 5 zeigt das Funktionsprinzip der Optik aus Fig. 3, wobei anstatt der Fresnel-Linse eine äquivalente Kondensorlinse dargestellt ist,
die Fig. 6a zeigt die Sammellinsenstruktur einer ebenen Sammellinse der Optik aus Fig. 3,
die Fig. 6b zeigt eine aus gleichartigen Elementen zusammengesetzte Streulinse der Optik aus Fig. 3,
die Fig. 7 zeigt eine Ausführungsvariante der erfindungsgemäßen Signalleuchte im vertikalen Längsschnitt,
die Fig. 8 zeigt eine Ausführungsvariante einer zur Verwendung im erfindungsgemäßen Signal geeigneten LED-Linse in Grund-, Auf- und Seitenriss,
die Fig. 9 zeigt eine weitere Ausführungsvariante einer zur Verwendung im erfindungsgemäßen Signal geeigneten LED-Linse im Seitenriss,
die Fig. 10 zeigt eine weitere Ausführungsvariante einer zur Verwendung im erfindungsgemäßen Signal geeigneten LED-Linse im Seitenriss,
die Fig. 11 zeigt eine Ausführungsvariante einer LED-Linse für nur eine LED in Grund- und Aufriss,
und die Fig. 12 zeigt einen Verbund zweier LED-Linsen nach Fig. 11 in Grund-, Auf- und Seitenriss.

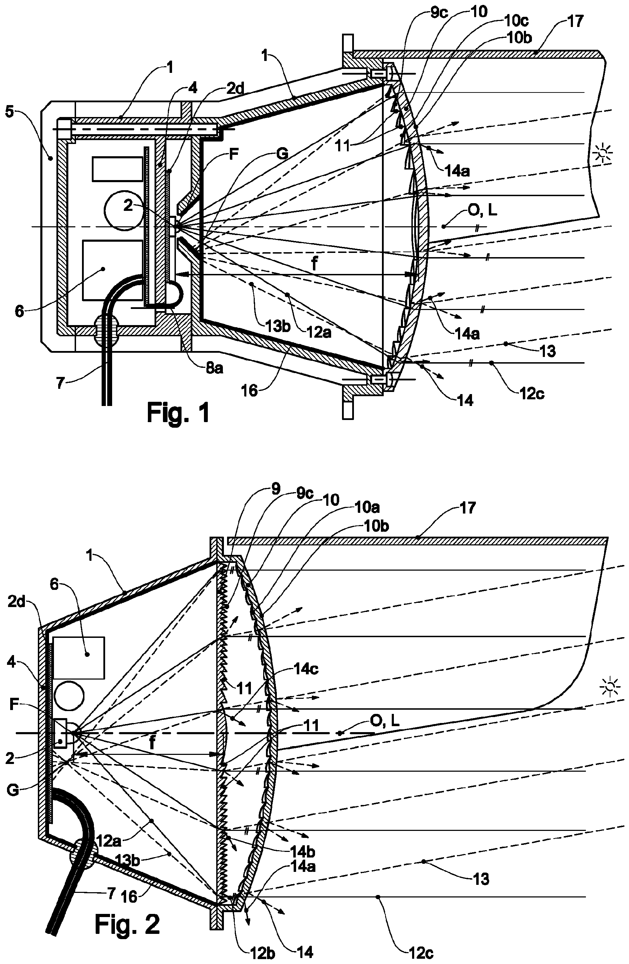

Fig. 1 zeigt ein LED-Bahnsignal nach dem Stand der Technik im vertikalen Längsschnitt, enthaltend ein Gehäuse 1, eine LED-Lichtquelle 2, eine wärmeverteilende Auflagefläche 4, einen Kühlkörper 5, eine Ansteuerungselektronik 6, einen elektrischen Anschluss 7, eine gekrümmte Austrittsoptik 10 in Form einer Streulinse, bestehend aus Fresnel-Ringen 9c, einer Austrittsfläche 10b, einer überlagerten Streustruktur 10c und deren Verbindungsflächen 11, einer lichtabsorbierenden Innenfläche 16 und einer Sonnenblende 17. Die LED-Lichtquelle 2 befindet sich im Inneren des Gehäuses 1 im Brennpunkt F der gekrümmten Austrittsoptik in Form einer kombinierten Streulinse 10, auf deren Innenseite sich die Fresnel-Ringe 9c befinden, die mit einer Streustruktur 10c überlagert sind, und deren Außenseite die glatte und daher reinigungsfreundliche Austrittsfläche 10b bildet. Durch die Fresnelringe 9c werden von der LED-Lichtquelle 2 ausgehende Lichtstrahlen 12a parallel gerichtet und gleichzeitig durch die Streustruktur 10c gestreut. Danach treten die gestreuten Lichtstrahlen 12c in den Beobachtungsbereich aus dem Signal aus. Hinter der LED-Lichtquelle 2 befindet sich die Ansteuerungselektronik 6 mit dem elektrischen Anschluss 7. Weiters sind im hinteren Bereich des Gehäuses 1 Rippen angebracht, die als Kühlkörper 5 fungieren. Einfallende Sonnenstrahlen 13 werden durch die Fresnelringe 9c der kombinierten Streulinse 10 ins Innere gebündelt. Die gebündelten Sonnenstrahlen 13b bilden im dargestellten Beispiel einen unter der LED-Lichtquelle 2 liegenden Brennfleck G. Alle Innenflächen 16 des Gehäuses sind geschwärzt und absorbieren auftreffendes Licht. Die Austrittsfläche 10b der Optik reflektiert einen Teil des Sonnenlichts in einen großen Bereich. Ein Beobachter sieht daher aus verschiedenen Beobachtungsrichtungen einen hellen Sonnenreflex auf der Austrittsfläche. Um die Sonnenreflexe bestmöglich zu vermeiden ist über dem Bahnsignal die sehr lange Sonnenblende 17 angebracht, die jedoch bei niedrig stehender Sonne nur die im oberen Bereich einfallenden Sonnenstrahlen abhalten kann. Dadurch entstehen aber weiterhin Sonnenreflexe 14 der äußeren Oberfläche 10b, die im gesamten Beobachtungsbereich sichtbar sind. Daneben entstehen auch weitere störende Sonnenreflexe 14a an allen weiteren Linsenflächen der Streustruktur 10c über den gesamten Signalquerschnitt verteilt. Diese werden jedoch zumeist als weniger störend wahrgenommen. Oft werden sie zusätzlich durch eine Einfärbung der Austrittsoptik abgeschwächt. Hauptverantwortlich für diese Art von Sonnenreflexen ist die Fresnel-Linse, welche mit ihren Ringen 9c und deren Verbindungsflächen 11 eine Vielzahl von Oberflächen-Reflexionen 14a, 14b und 14c in alle Richtungen erzeugt, und zwar umso mehr, je mehr Ringe die Linse aufweist und je größerer ihre Brechkraft ist. Im Extremfall kann sogar eine Totalreflexion entstehen. Ebenso können Gestaltungs- und Produktionsmängel erhebliche lichttechnische Probleme schaffen, wenn die Oberflächen nicht exakt ausgeführt sind.

Fig. 2 zeigt ein LED-Straßensignal nach dem Stand der Technik im vertikalen Längsschnitt, enthaltend ein Gehäuse 1, eine LED-Lichtquelle 2, eine Ansteuerungselektronik 6, einen elektrischen Anschluss 7, eine Sammellinse 9, eine Streulinse 10 und eine Sonnenblende 17. Die LED-Lichtquelle 2 befindet sich auf einer Platine 2d, mit der elektronischen Ansteuerung 6 und dem Kabelanschluss 7, im Inneren des Gehäuses 1 im Brennpunkt F der eine Fresnel-Struktur 9c aufweisenden Sammellinse 9. Durch die Sammellinse 9 wird das von der Lichtquelle 2 abgestrahlte Licht 12a parallel gerichtet. Die parallelen Lichtstrahlen 12b treffen anschließend auf die eine Streulinsenstruktur 10a aufweisende Streulinse 10, welche in weiterer Folge Licht 12c in der gewünschten Art abstrahlt. Sowohl das Verhalten bei Sonneneinstrahlung als auch die Wirkung der Sonnenblende sind analog zum Beispiel aus Fig. 1, jedoch ist die Brennweite f wesentlich kürzer. Dadurch ergibt sich eine etwas geringere Lichtbündelung im Vergleich zu Fig. 1 und eine breitere Lichtabstrahlung, wie sie im Straßenverkehr benötigt wird. Die Austrittsoptik ist als zweiteiliges Baukastensystem aufgebaut, um durch Austausch der Streulinse 10 unterschiedliche Lichtverteilungen oder Färbungen des austretenden Lichts 12c zu erreichen. Die äußeren Ringe der Fresnel-Struktur 9c verursachen dadurch jedoch ein wesentlich stärkeres Reflex-Phantomlicht als bei einteiligen Ausführungen. Darüber hinaus ist es auch hier bei niedrig stehender Sonne nur möglich die im oberen Bereich einfallenden Sonnenstrahlen abzuhalten. Dadurch entstehen weiterhin Reflexionen 14 der äußeren Oberfläche 10b, die im gesamten Beobachtungsbereich sichtbar sind. Wie im Beispiel aus Fig. 1 entstehen auch hier über den gesamten Signalquerschnitt verteilt weitere störende Sonnenreflexe 14a an allen weiteren Linsenflächen der Streustruktur 10c. Auch hier werden diese jedoch zumeist als weniger störend wahrgenommen und oft durch eine Einfärbung der Austrittsoptik abgeschwächt. Hauptverantwortlich für die Reflexionen ist auch hier die Fresnel-Linse, welche mit ihren Ringen 9c und deren Verbindungsflächen 11 eine Vielzahl von Reflexlichtstrahlen 14a, 14b und 14c in alle Richtungen erzeugt, je mehr Ringe die Linse aufweist und je größerer ihre Brechkraft ist. Im Extremfall kann wieder Totalreflexion auftreten. Auch hier können Gestaltungs- und Produktionsmängel gleichartige erhebliche lichttechnische Probleme schaffen.

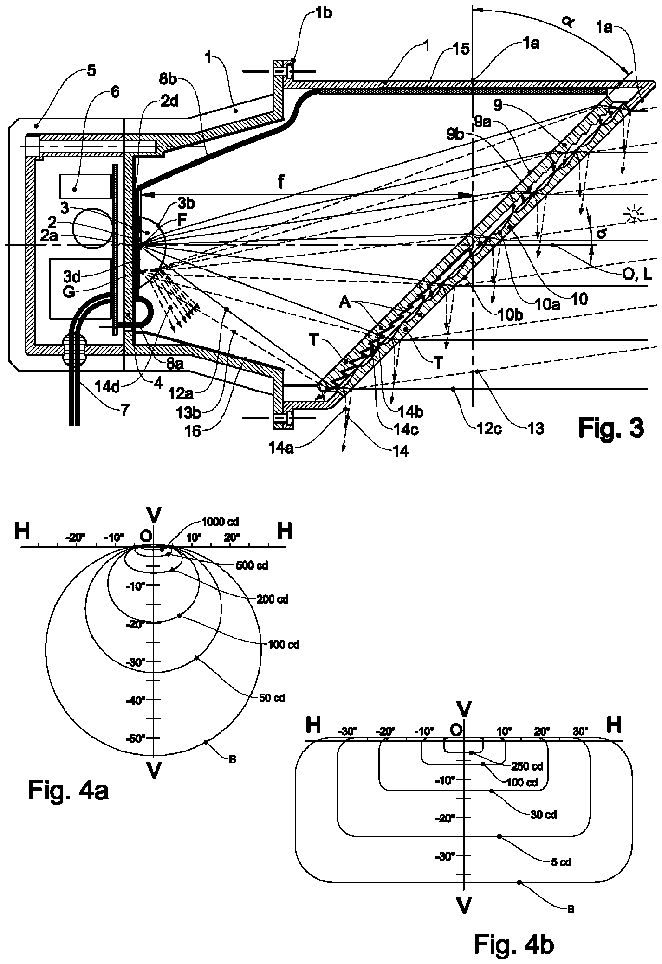

Fig. 3 zeigt eine erfindungsgemäße Signalleuchte im vertikalen Längsschnitt, enthaltend ein Gehäuse 1 mit einer Außenfläche 1a, eine LED-Lichtquelle 2, eine LED-Linse 3, eine wärmeverteilende Auflagefläche 4, einen Kühlkörper 5, eine Ansteuerungselektronik 6, einen elektrischen Anschluss 7, elektrische Verbindungen 8a und 8b, die eine Eintrittsfläche 9a sowie eine Sammellinsenstruktur 9b aufweisende Sammellinse 9, die eine Streulinsenstruktur 10a sowie eine Austrittsfläche 10b aufweisende Streulinse 10, eine Heizung 15 und eine lichtabsorbierende Innenfläche 16. In dem Gehäuse 1 befindet sich eine zentral angeordnete LED-Lichtquelle 2 auf der Platine 2d, mit der vorgesetzten LED-Linse 3 auf der wärmeverteilenden Auflagefläche 4, welche mit dem Kühlkörper 5 wärmeleitend verbunden ist. In einem Freiraum befindet sich die elektronische Ansteuerung 6, die über einen elektrischen Anschluss 7 mit dem Signalsteuerungssystem verbunden ist. Sie schaltet und überwacht die LED-Lichtquelle 2 über die elektrische Verbindung 8a. Die LED-Linse 3 lenkt Lichtstrahlen 12a der LED-Lichtquelle 2 auf eine in einem Abstand davor angeordnete Austrittsoptik A, welche im Gegensatz zu den bisherigen Signalbauweisen nach Fig. 1 und Fig. 2 um einen Neigungswinkel α gegenüber der Senkrechten geometrisch verzerrt ist. Darunter wird nicht etwa eine simple Neigung der Austrittsoptik A in bekannter Ausführung, sondern eine linear zunehmende axiale Verlagerung jedes Linsen-Oberflächenpunktes mit zunehmender vertikaler Entfernung von der optischen Achse O verstanden, inklusive einer optischen Korrektur zur Wiederherstellung des Brennpunktes F, in welchem sich die LED-Lichtquelle 2 befindet, ansonsten würden die austretenden Lichtstrahlen bei diesem geometrischen Verzerrungsprozess ihre Richtung etwas ändern. Die Austrittsoptik A besteht aus der Sammellinse 9 in Gestalt einer Trägerscheibe T mit glatter Eintrittsfläche 9a sowie einer Sammellinsenstruktur 9b auf ihrer Rückseite, und der Streulinse 10 in Gestalt einer weiteren Trägerscheibe T mit einer Streulinsenstruktur 10a innen und außen einer glatten Austrittsfläche 10b für das abgestrahlte Lichtbündel 12c. Die Austrittsfläche 10b begrenzt zugleich das Gehäuse 1 nach vorne, indem sie gedanklich hinaus tangential bis über dessen Rand verlängert wird, sodass eine gemeinsame glatte Außenfläche 1a+10b entsteht. Die optische Achse O stellt zumeist eine Mittelachse der Signalleuchte dar, die geometrisch leicht nachvollziehbar ist, und erstreckt sich in Richtung der maximalen Helligkeit der Signalleuchte, könnte aber auch davon abweichend festgelegt sein. Sie dient der horizontalen und vertikalen Ausrichtung vor Ort und einer bezugsmäßig definierten Vermessung der Lichtverteilung und Helligkeit. Das Gehäuse 1 weist im Bereich seines vollen Umfangs Fortsätze 1b auf, welche als Befestigungsflansch, als Halterung für eine justierbare Einstellung mittels Federn und Schrauben, oder für andere bekannte Befestigungsmethoden ausgeführt sind. Im spitzen vorderen Abschnitt des Gehäuses 1 kann eine Heizung 15 vorgesehen werden. Dort erwärmt sie die Austrittsfläche 10b und die obere Gehäusewand und sorgt dafür, dass sich weder Schnee noch Eis an der Austrittsfläche 10b ablagert, noch auf der Signalleuchte auftürmt und eine allfällig darüber angeordnete weitere Leuchte verdeckt. Die Heizung 15 kann wie dargestellt als eingeklebte Heizfolie, aber auch als Platine mit Widerständen, als Infrarot-LEDs oder -Strahler, als Heizstab, oder auf jede andere aus dem Stand der Technik bekannten Weise ausgestaltet sein. Die glatte, abwärts geneigte Austrittsfläche 10b erschwert Ablagerungen und begünstigt ohne die bekannte übliche Sonnenblende die Selbstreinigung durch ungehinderten Regen- bzw. Wasser-Zutritt, bzw. durch Luftwirbel erzeugte Gischt vorbeifahrender Züge. Außer den LED-Lichtstrahlen 12a bzw. 12c sind noch unter einem Sonnenstandswinkel σ einfallende Sonnenstrahlen 13 dargestellt. An jeder optischen Grenzfläche entstehen Reflexlichtstrahlen 14, 14a, 14b, 14c, welche durch die schräge Verzerrung der Austrittsoptik A im Wesentlichen nach unten gelenkt werden. Auch die LED-Lichtstrahlen 12a erzeugen Reflexe, diese stören jedoch die Erkennbarkeit nicht, sie verbessern diese sogar, weil sie nur im eingeschalteten Zustand und in der Signalfarbe auftreten und das Erscheinungsbild vergleichmäßigen. Sie werden daher in Folge nicht weiter behandelt und auch nicht dargestellt. Die Sonne hingegen scheint unabhängig vom Schaltzustand um ein Vielfaches heller, sowie in einer anderen Farbe, weshalb ihre Reflexe stören und beseitigt werden müssen. Ein Beobachter der Signalleuchte darf durch Sonnenreflexe nicht am Erkennen ihres Signalisierungszustandes beeinträchtigt sein, unabhängig von seiner Position innerhalb des festgelegten oder ermittelten Beobachtungsbereiches.

Eine Signalleuchte soll im Allgemeinen eine gleichmäßig helle, runde Lichtaustrittsfläche aufweisen, um Fehlinterpretationen eines fleckigen oder unregelmäßigen Erscheinungsbildes, etwa auch bei LED-Ausfällen, zu verhindern. Die EN 12368:2015 für Verkehrsampeln gibt ein Leuchtdichteverhältnis auf der Austrittslinse besser als 1:10 vor. Eine sehr schräg verzerrte Sammellinse weist diesbezüglich ein Problem für die Lichtquelle auf. Die stark unterschiedlichen Abstände vor allem randseitiger Kondensorlinsen-Bereiche zur Lichtquelle erzeugen einen überproportionalen Helligkeitsunterschied, der durch eine entsprechend starke Verzerrung des Lichtkegels der Lichtquelle ausgeglichen werden muss. Dieser verzerrte Lichtkegel wird von der LED-Linse 3 mittels ihrer speziell ausgeführten Freiform-Austrittsfläche 3b erzeugt, mathematisch ausgedrückt sind die Intensitäten der von der LED-Linse 3 austretenden Lichtstrahlen 12a im Wesentlichen proportional dem Produkt des Entfernungsquadrats zu deren Auftreffpunkten auf der um den Neigungswinkel α schräg verzerrten Eintrittsfläche 9a der Austrittsoptik A und dem Kehrwert des Cosinus der Auftreffwinkel der Lichtstrahlen ebendort. Die LED-Linse ist auch insgesamt so gestaltet, dass sie selbst kein störendes Phantomlicht erzeugt. Sie dient weiters dazu, möglichst viel Licht der LED-Lichtquelle nutzbringend einzufangen. Eine hohe Effizienz der Lichtnutzung erlaubt dann weitere Maßnahmen, das Phantomlicht abzusenken, wie etwa Filterung.

Eine Signalleuchten-Optik soll auch aus jeder Richtung des Beobachtungsbereichs eine vollständig leuchtende Lichtaustrittsfläche bieten. Das ist nur möglich, wenn das Licht nicht nur gleichmäßig über diese Fläche verteilt, sondern anschließend in ein paralleles Lichtbündel übergeführt wird, welches dann wieder durch eine große Vielzahl von gleichartig wirkenden Streuelementen in den Beobachtungsbereich verteilt wird. Jedes Streuelement erscheint dann im Auge des Betrachters als zumindest ein kleiner Lichtpunkt bestimmter Intensität, die Summe aller dieser Lichtpunkte verschwimmt dann ab einer gewissen Entfernung zu einer einheitlich leuchtenden Fläche. Es müssen bei der erfindungsgemäßen Ausführung nicht nur die LED-Lichtstrahlen korrekt verteilt, sondern zusätzlich auch die Reflexe ermittelt und außerhalb des Beobachtungsbereiches gelenkt werden. Eine wesentliche Gestaltungsmöglichkeit dafür ist die richtige Wahl des Neigungswinkels α der Austrittsoptik. Damit können die Sonnenreflexe unterhalb des Beobachtungsbereichs gelenkt werden.

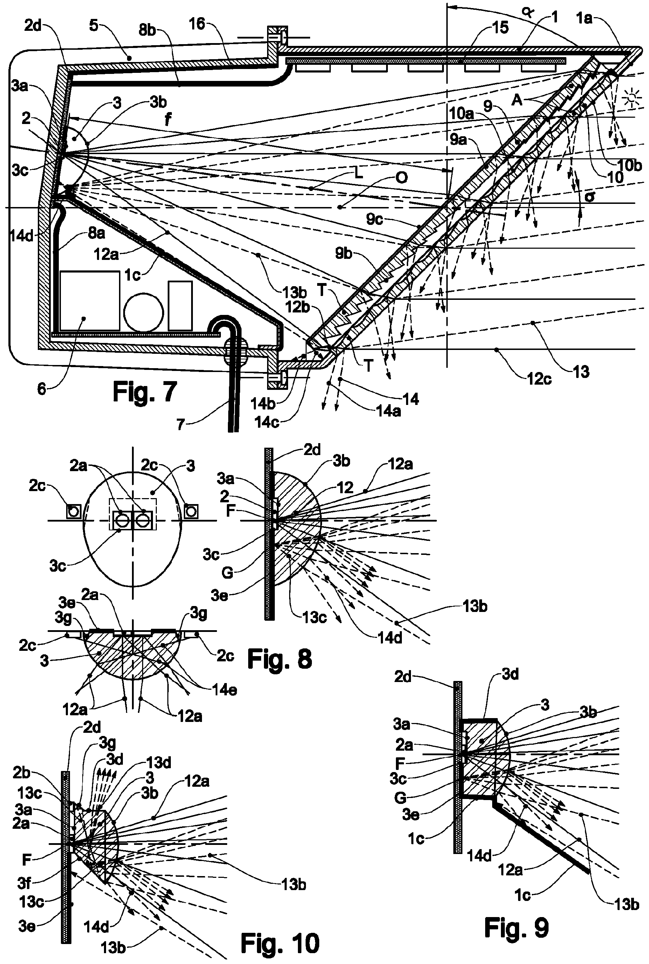

Fig. 4a zeigt den typischen Beobachtungsbereich B für engbündelnde Bahnsignale und Fig. 4b den typischen Beobachtungsbereich für breit abstrahlende Straßenverkehrssignale. Die Horizontale Achse H und die vertikale Achse V weisen eine Winkelskala auf. Sie schneiden einander im Nullpunkt, durch den auch die optische Achse der Signalleuchte führt. In Fig. 3 und Fig. 7 ist die optische Achse mit O gekennzeichnet, in Fig. 1 und Fig. 2 handelt es sich um die axiale Symmetrieachse der Optik 10. Die eingetragenen Iso-Candela-Diagramme zeigen Bereiche hoher und geringer Helligkeit an. Ein Bahnsignal weist typischer Weise einen nur wenige Grad breiten, schmalen Bereich höchster Helligkeit rund um die optische Achse O auf. Oberhalb der horizontalen Achse können die Signalleuchten nicht beobachtet werden, da sie fast ausnahmslos unerreichbar in mehreren Metern Höhe auf Masten montiert sind. Nähert sich ein Fahrer, so muss er das Signal auch von weiter unten erkennen, im Fall einer Kurve oder seitlich angebrachter Signalleuchte auch in zunehmendem Maße von der Seite. Bei Annäherung an das Signal ist weniger Signalhelligkeit erforderlich. Muss vor der Signalleuchte angehalten werden, so muss der Schaltzustand auch aus sehr schrägen und seitlichen Winkeln erkennbar sein, dazu ist aber wegen des geringen Abstandes relativ wenig Helligkeit erforderlich. Weiters ist es vorteilhaft, wenn Wartungstrupps am Boden das Signallicht zu Kontrollzwecken auch von unten erkennen können. Die in den dargestellten Iso-Candela-Diagrammen gezeigte Helligkeitsverteilung kann an die jeweils vorliegende Situation angepasst werden und ist nur als beispielhaft anzusehen. So ist etwa auch ein sehr schmaler Lichtkegel möglich, der eine seitliche Sichtbarkeit von Nachbargleisen aus verhindert, um etwa in einem Bahnhof klare Zuordnungen zu den Gleisen zu haben. Weiters sind asymmetrische Abstrahlungen wünschenswert, um Anrainer nicht zu belästigen, oder wenn passende Lichtverteilungen für Kurven gewünscht sind. Im Fall einer auf geringere Entfernungen wirkenden Verkehrsampel ist die zentrale Helligkeit meist wesentlich geringer, die Lichtverteilung hingegen viel breiter, wie Fig. 4b zeigt. Mindest-Lichtverteilungen werden in Vorschriften zumeist durch wenige, charakteristische Punkte oder Bereiche mit vorgeschriebener Mindest- oder Maximalhelligkeit definiert. Diese können noch durch Erfahrungen oder Erweiterungen ergänzt werden, sodass insgesamt ein sinnvoller Beobachtungsbereich B festgelegt wird, in dessen Winkelbereich Reflexe der Sonne weitestgehend zu vermeiden sind, und der in den Diagrammen als äußerste Kurve eingezeichnet ist. Außerhalb dieses Beobachtungsbereiches dürfen beliebige Reflexionen auftreten, sofern diese nicht die Umgebung stören.

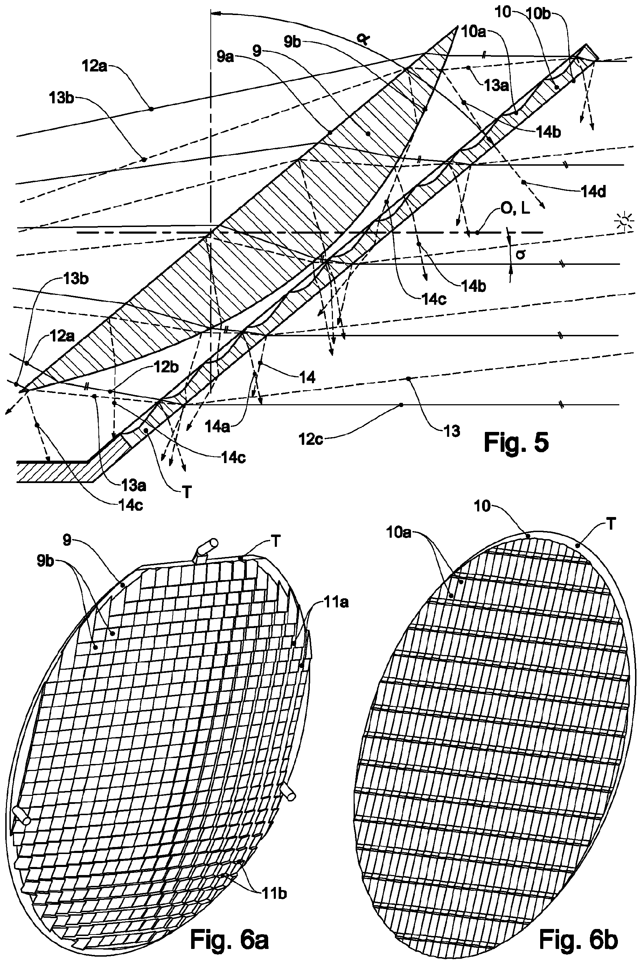

Fig. 5 zeigt ein wesentliches Detail des Funktionsprinzips im vertikalen Längsschnitt der Austrittsoptik A gemäß Fig. 3. LED-Lichtstrahlen 12a treffen von der LED-Linse kommend auf die Eintrittsfläche 9a der Sammellinse 9. Diese ist hier als massive Kondensorlinse dargestellt. Weil sich die LED-Lichtquelle in deren Brennpunkt befindet, bündelt sie die LED-Lichtstrahlen 12a parallel zueinander, als 12b bezeichnet, welche anschließend auf die Streulinse 10 treffen, die auf ihrer Innenseite eine Streulinsenstruktur 10a und eine glatte Austrittsfläche 10b aufweist. Die Streulinsenstruktur 10a ist in der Regel so beschaffen, dass sie einen Teil der LED-Lichtstrahlen fast unverändert durchlässt, um damit das enge Lichtbündel parallel zur optischen Achse O zu erzeugen, und lenkt den übrigen Anteil gezielt zur Seite und nach unten ab, wodurch sich die Helligkeitsverteilungen entsprechend der Fig. 4a und 4b ergeben. Treffen nun Sonnenstrahlen 13 auf diese Anordnung, so werden bei jeder Linsenoberfläche nach dem Snellius'schen Gesetz Reflexlichtstrahlen 14, 14a, 14b und 14c erzeugt, wobei innerhalb generierte Reflexlichtstrahlen auch Linsenflächen durchqueren und zuletzt nach außen abstrahlen. Die Reflexlichtstrahlen 14 der Austrittsfläche 10b sind einfach zu bestimmen, sie gehen nach unten. Die Reflexlichtstrahlen 14a der Streulinsenstruktur 10a verlaufen wegen der abwärtslenkenden Wirkung der Struktur auch nach unten bis nach hinten. Die hier zur besseren Einschätzung der Richtung der Reflexlichtstrahlen als Kuppe dargestellte Sammellinsenstruktur 9b der Sammellinse 9 erzeugt Reflexlichtstrahlen 14b, welche oben unter einem Winkel nach vorne, im Mittelbereich nach unten und unten eher nach hinten austreten. Reflexlichtstrahlen 14c, die von der Eintrittsfläche 9a der Sammellinse 9 reflektiert werden, verhalten sich hingegen umgekehrt. Wie im dargestellten Beispiel zu sehen ist, streben alle Reflexlichtstrahlen nach unten. Wenn der Abwärtswinkel des am wenigsten nach unten gelenkten Reflexlichtstrahles 14d außerhalb des Beobachtungsbereiches nach Fig. 4a bzw. Fig. 4b liegt, dann sind insgesamt keine störenden Reflexe erkennbar. Die Reflexlichtstrahlen 14a, 14b und 14c erzeugen ihrerseits ebenfalls kaskadierende Reflexlichtstrahlen. Die Snellius'schen Formeln besagen jedoch, dass bei nicht allzu flachen Winkeln nur wenige Prozent des durchlaufenden Lichtstrahles reflektiert werden. Das gilt in weiterer Folge auch für alle weiteren Reflexionen, sodass dabei kaum mehr störendes Licht entsteht. Es ist daher ausreichend, die hier dargestellte zweite Generation an Lichtstrahlen zu berücksichtigen. Einige Reflexlichtstrahlen laufen wegen Totalreflexion ein Stück in Längsrichtung innerhalb der Linsen und verlassen diese erst bei einer günstigen Oberflächen-Konstellation, wobei sie nur wenig von der Erstreckungsrichtung der Linse abweichen und deshalb nicht in den Beobachtungsbereich gelangen. Diese Weiterleitung innerhalb der Linsen kann durch eine Linsen-Einfärbung wesentlich reduziert werden. Der Neigungswinkel α ist in diesem Beispiel so gewählt, dass alle Reflexlichtstrahlen der zweiten Generation 14a, 14b, 14c unterhalb des Beobachtungsbereiches austreten. Um den Neigungswinkel α in Einklang mit den Reflexlichtstrahlen und dem Beobachtungsbereich zu bringen, bedarf es einer aufwändigen simulatorischen Optimierung der Optik, bei der nicht nur die Linsengeometrien dem veränderlichen Neigungswinkel α anzupassen, sondern auch die Reflexlichtstrahlen für eine Vielzahl an Sonnenpositionen zu bestimmen sind. Die Sammellinse 9 ist hier als PlankonvexLinse dargestellt. Es ist aber genauso gut möglich, sie als Bikonvex- oder Konkav-KonvexLinse auszuführen und auch um 180° gedreht einzubauen. Hierdurch verändert sich trotz gleichartiger Bündelung die Charakteristik der an ihren Grenzflächen erzeugten Reflex-Lichtstrahlen 14b und 14c, sodass zusätzlich zum Neigungswinkel α weitere Gestaltungsparameter zur Vermeidung oder Reduktion der Reflexe im Beobachtungsbereich zur Verfügung stehen. Davon wird auch die Helligkeitsverteilung über die Austrittsoptik beeinflusst, was eine Adaption der LED-Linse 3 (Fig. 3) erfordert. Die dargestellte massive Kondensorlinse 9 dient hier nur der besser erkennbaren Darstellung der Verläufe der Reflexlichtstrahlen. Der Einsatz einer solchen Kondensorlinse ist jedoch aus wirtschaftlicher Sicht nicht relevant. Sie ist wegen ihrer Neigung geometrisch verzerrt, hat deswegen keine drehsymmetrische Fasson und ist deshalb auch nicht als bekannte Fresnellinse mit konzentrischen Ringen konstanten Querschnitts umsetzbar. Diese komplexe Oberfläche kann aber in Analogie dazu vorerst durch eine Vielzahl von einfachen Elementen oder Facetten angenähert werden, welche im nächsten Schritt dann längs der Richtungen ihrer durchdringenden Lichtstrahlen soweit in Richtung Eintrittsfläche 9a verschoben werden, dass eine Trägerscheibe T mit konstanter Basiswandstärke entsteht (siehe Fig. 7). Durch diese individuelle Staffelung der unmittelbar aneinandergrenzenden Elemente oder Facetten zueinander entstehen Verbindungsflächen, welche der Sammellinsenstruktur ein prismatisch zusammengefügtes Aussehen verleihen, insbesondere im Fall einer regelmäßigen RasterAnordnung, wobei die Flächenelemente an jeder Stelle die gleiche Neigung bzw. Brechkraft wie die ursprüngliche Linsenkontur aufweisen. Hierbei kann insbesondere bei einem feinen Raster jedes Flächenelement näherungsweise durch eine Ebene mit durchschnittlich gleicher Brechkraft ersetzt werden, um beispielsweise die Simulation und Herstellung zu vereinfachen. Ist eine Linsen-Seite eben wie Eintrittsfläche 9a, ist das einer einfacheren Herstellung und Berechnung geschuldet, aber nicht zwingend erforderlich. Die erforderliche Brechkraft kann auch durch die Summenwirkung mehrerer solcher Sammelstrukturen erhalten werden, wobei eine Struktur frei wählbar ist, die jeweils andere Struktur muss dann die erforderliche Brechkraft erzeugen, in Analogie zu einer bikonvexen Sammellinse. Hierdurch werden auch die Reflexlichtstrahlen in ihrer Austrittsrichtung beeinflusst, sodass neben der Wahl des Neigungswinkels α eine weitere wesentliche Möglichkeit der Reflex-Beeinflussung besteht.

Fig. 6a zeigt eine perspektivische Ansicht der Sammellinsenstruktur 9b der ebenen Sammellinse 9 aus Fig. 3, zu erkennen sind die sich allmählich verändernden Neigungen der Sammellinsenstruktur. Sie verhält sich lichttechnisch analog zur Kondensorlinse aus Fig. 5, allerdings entstehen zwischen den Flächenelementen unvermeidliche Stufen, die als Verbindungsflächen 11a, 11b aufscheinen und ein prismatisches Erscheinungsbild ergeben. Diese werden ebenso simulatorisch auf ihre Einflüsse auf das Reflexlicht mituntersucht und im Rahmen ihres geringen Spielraumes bezüglich ihrer Neigungen optimiert.

Fig. 6b zeigt eine perspektivische Ansicht einer aus gleichartigen Elementen zusammengesetzten Streulinsenstruktur 10a einer ebenfalls ebenen Streulinse 10, wie sie auch in Fig. 5 zu sehen ist. Sie kommt bei der hier vorliegenden Lichtverteilung ohne Verbindungsflächen aus, könnte aber in anderen Fällen durchaus welche aufweisen.

Fig. 7 zeigt eine Ausführungsvariante der erfindungsgemäßen Signalleuchte im vertikalen Längsschnitt. Sie enthält eine analog zu Fig. 3 zweiteilige Austrittsoptik A mit einer Sammellinse 9, einer Eintrittsfläche 9a an deren Innenseite und eine Sammellinsenstruktur 9b an deren Außenseite, sowie einer Streulinse 10 mit einer Streulinsenstruktur 10a an ihrer Innenseite und einer ebenen Austrittsfläche 10b an ihrer Außenseite. Eine einfache Streulinsenstruktur 10c analog zu Fig. 1 kann auch der Sammellinsenstruktur 9b, oder wie dargestellt, auch der Eintrittsfläche 9a der Sammellinse 9 überlagert werden. Weiters enthält die dargestellte Ausführung eine LED-Lichtquelle 2 mit LED-Linse 3, welche oberhalb der optischen Achse O unmittelbar am gehäuseartigen Kühlkörper 5 anliegt und soweit nach vorne geneigt ist, dass die Lichtachse der LED-Lichtquelle L ins Zentrum der Austrittsoptik A läuft. Diese Bauweise kann einerseits kürzer als in Fig. 3 ausfallen, jedoch eine größere mittlere Brennweite f aufweisen. Dabei entsteht unterhalb der LED-Lichtstrahlen 12a ein größerer Freiraum, der die elektronische Ansteuerung 6 mitsamt elektrischem Anschluss 7 und ihrer elektrischen Verbindung 8a zur LED-Lichtquelle 2 aufnimmt. Sie ist durch eine Abdeckung 1c, welche lichtabsorbierend und gut wärmeleitend ausgeführt ist, vor Sonnenstrahlen 13b geschützt. Diese ist mit dem Kühlkörper 5 thermisch leitend verbunden und kann auch eine LED-Linsenhalterung aufweisen. Ebenfalls dargestellt ist eine Heizung 15, in einer Ausführung als Platine mit Leistungswiderständen, die über eine elektrische Verbindung 8b an die LED-Platine 2d und weiterführend über die Verbindung 8a und elektronische Ansteuerung 6 an den elektrischen Anschluss 7 angebunden ist. Die Verlagerung des Brennpunktes F führt auch zu einer veränderten Geometrie insbesonders der Sammellinse, wodurch ebenso Einflussnahme auf die Reflexlichtstrahlen möglich ist.

Die erfindungsgemäßen Ausführungen nach Fig. 3 und Fig. 7 beinhalten die LED-Lichtquelle 2 mit der vorgesetzten LED-Linse 3, welche nach den nun folgenden Gestaltungsregeln aufgebaut sind, um sowohl echtes, wie auch Reflexions-Phantomlicht zu verhindern.

Fig. 8 zeigt eine beispielhafte Basis-Ausführung der LED-Lichtquelle 2, enthaltend LEDs 2a, Sensoren 2c und eine LED-Platine 2d, samt der LED-Linse 3 in Grund-, Auf- und Seitenriss. Unmittelbar vor den LEDs 2a befindet sich die ebene Eintrittsfläche 3a. Darüber wölbt sich eine hier bis zur LED-Platine 2d verlängert dargestellte Austrittsfläche 3b, welche LED-Lichtstrahlen 12 als Lichtstrahlen 12a auf die schräg verzerrte Austrittsoptik lenkt. Bei der Austrittsfläche 3b handelt es sich geometrisch um eine komplexe Freiformfläche, denn die LED-Lichtstrahlen 12 werden in unterschiedlichem Dichteverlauf auf die Austrittsoptik gelenkt. Im unteren Bereich liegt die Austrittsoptik näher zur LED-Linse 3 als im oberen Bereich, daher wird oben eine höhere Lichtbündelung, unten ein niedrigere Lichtbündelung benötigt, um ein gleichmäßig helles Erscheinungsbild zu erzeugen. Die LEDs 2a der Lichtquelle weisen eine dichte Packung mit minimaler vertikaler Erstreckung auf, also vorzugsweise eine horizontale, lineare Anordnung. Die vorzugsweise eben vergossenen LEDs leuchten in die dicht davor befindliche glatte und ebene Eintrittsfläche 3a der LED-Linse 3 hinein, welche durch eine horizontal verlaufende Eintrittsflächenkante 3c unmittelbar unterhalb der LEDs begrenzt ist. Weiters ist eine Licht-Absorbtionsschicht 3e dargestellt. Diese ist optional, aber vorteilhaft und kann etwa in Form eines schwarzen elastischen Klebstoffs ausgeführt werden, mit welchem die LED-Linse 3 auf der LED-Platine 2d befestigt ist. Gelangen in dieser Ausführung Sonnenstrahlen 13b bis zur LED-Linse 3, so treffen sie in räumlicher Relation zum Brennpunkt der LED-Lichtstrahlen 12a, 12b, 12c, etwas nach unten verschoben und etwas schräger auf der Austrittsfläche 3b auf, dringen zum großen Teil in die LED-Linse 3 ein und werden unterhalb der Eintrittsfläche 3a auf die absorbierende Beschichtung 3e oder den schwarzen Klebstoff in einen Brennfleck G gebündelt, wo sie zur Gänze absorbiert werden. An der Austrittsfläche 3b entstehen Reflexlichtstrahlen 14d, die zum großen Teil nach unten ins schwarz beschichtete Gehäuse reflektiert und absorbiert werden. Durch diese Anordnung können erst bei sehr niedrigem Sonnenstand Sonnenstrahlen auf die Eintrittsfläche 3a gelangen, wo sie weiter in die LEDs 2a vordringen und echtes Phantomlicht erzeugen können. Diese werden darüber hinaus zu einem geringen Prozentsatz von der Eintrittsfläche 3a reflektiert. Diese Konstellation des beginnenden Auftreffens von Sonnenstrahlen auf der Eintrittsfläche 3a wird als Mindest-Sonnenstandswinkel σ bestimmt, ein Unterschreiten dieses Winkels führt zu einem deutlichen Anstieg des echten Phantomlichts. Auch die Reflexlichtstrahlen 14d werden zu einem kleinen Teil auf die Austrittsoptik zurückgeworfen und über den Beobachtungsbereich gestreut, wo sie eine minimale Helligkeitssteigerung bewirken. Diese unvermeidliche Konstellation kann durch geeignete Parameterwahl und Gestaltung entschärft werden, insbesondere durch eine große Brennweite f, optische und geometrische Präzision und eine vorteilhaft gestaltete, möglichst klein gehaltene LED-Linse 3, sowie eine Filterwirkung der Austrittsoptik zur generellen Abschwächung des Sonnenlichts innerhalb der Signalleuchte. Darüber hinaus befinden sich in dieser Anordnung Sensoren 2c beidseits der LED-Linse 3 und vorzugsweise oberhalb der LEDs 2a. Sie werden durch Reflexlichtstrahlen 14e beaufschlagt, welche an der Austrittsfläche 3b von LED-Lichtstrahlen 12 durch Reflexion abgespalten und durch seitliche Strahlenfenster 3g auf die Sensoren 2c gelenkt werden. Im Fall einer defekten LED 2a werden diese Sensoren wie bekannt ungleich beaufschlagt und lösen Alarm aus. Sie sind üblicher Weise gegen direktes Sonnenlicht abgedeckt.

Fig. 9 zeigt eine alternative Ausführung der LED-Linse 3. Diese ist im Durchmesser verkleinert und weist eine umlaufende Mantelfläche 3d auf. Die LED-Linse 3 ist nicht nur mit der LED-Platine 2d, sondern auch mit der Mantelfläche 3d in einer lichtabsorbierenden, wärmeleitenden Abdeckung 1c mit schwarzem Klebstoff befestigt. Hierdurch wird mehr Sonnenlicht absorbiert und weniger reflektiert als in Fig. 8, denn die LED-Linse 3 ist an den Lichtkegel der LED-Lichtstrahlen 12a angepasst, es ist jedoch eine an die Mantelfläche 3d angepasste Abdeckung notwendig, und ein Klebeprozess. Einfallende Sonnenstrahlen 13b bilden einen Brennfleck G, der die LED-Linse zerstören könnte, wenn keine Wärmeverteilung stattfindet. Im dargestellten Fall erfolgt diese über die verdickten Kupferflächen der gut wärmeleitenden LED-Platine 2d oder die beispielsweise aus Aluminium bestehende Abdeckung 1c.

Fig. 10 zeigt eine weitere Variante der LED-Linse 3 ohne eine darunterliegende Absorptionsschicht oder Verklebung. Die Absorptionsschicht 3e schließt erst unterhalb an die LEDs 2a an. Die LED-Linse 3 weist im unteren Bereich einer Mantelfläche 3d eine Schräge 3f auf, welche unmittelbar an die Eintrittsfläche 3a anschließt. Sonnenstrahlen 13c, welche auf diese Schräge treffen, werden nach oben total reflektiert, wo sie aus der Mantelfläche 3d austreten und im umgebenden schwarz beschichteten Gehäuse absorbiert werden. In der Mantelfläche 3d ist oben ein prismatisches Strahlenfenster 3g eingebaut, durch welches über Totalreflexion ein Teil der total reflektierten Sonnenstrahlen 13c auf einen Sonnenlichtsensor 2b gespiegelt wird, was zur Helligkeits-Beeinflussung des Signals genutzt werden kann. Die LED-Linse 3 kann hier auf beliebige Weise befestigt sein.

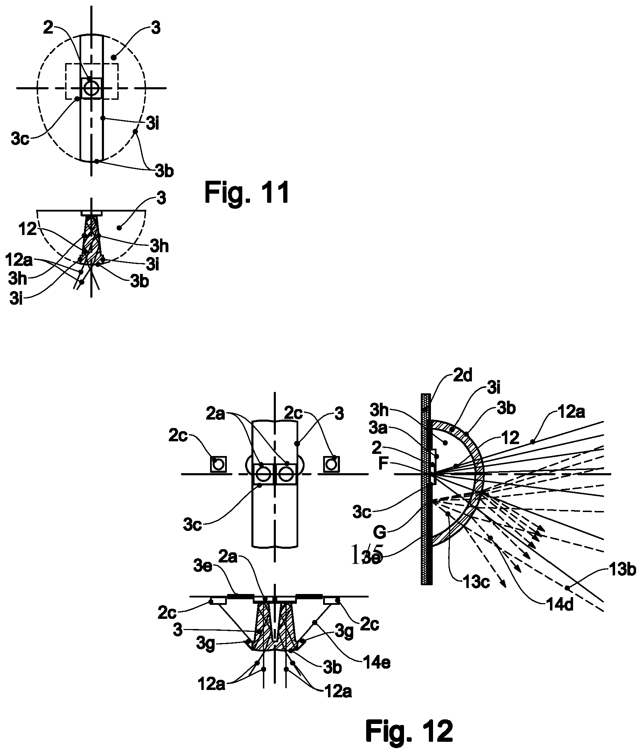

Fig. 11 zeigt eine alternative Ausführung der LED-Linse 3 aus Fig. 8 in Auf- und geschnittenem Grundriss. Hierbei sind die seitlichen Bereiche der LED-Linse 3 entfernt (strichliert dargestellt ist die Form aus Fig. 8). Diese ist nun durch konisch auseinanderlaufende Seitenflächen 3h begrenzt. Optional weist der äußerste LED-Linsenrand eine schmale ebene Kontaktfläche 3i auf. Die Seitenflächen 3h bilden damit für eine zentrisch angeordnete LED 2 einen lichtleitenden Kanal, welcher durch seitliche Totalreflexion der LED-Lichtstrahlen 12 zusammen mit der lichtbeugenden Austrittsfläche 3b das Licht bündelt und formt und ein sehr ähnliches Verteilungsergebnis der Lichtstrahlen 12a wie die vollständige LED-Linse 3 liefert. Die geringe Breite dieser Bauweise erlaubt eine Anordnung beliebig vieler solcher Elemente Seite an Seite.

Weil die LED-Linse nach Fig. 11 nur das Licht einer einzigen LED in der beschriebenen Weise bündeln muss, kann sie oft sehr viel kleiner ausgeführt werden, wodurch eine Produktion der LED-Linsen etwa mittels Kunststoff-Spritzguss vereinfacht, was die Herstellung erheblich verbilligt.

Fig. 12 zeigt eine Anordnung analog zu Fig. 11, allerdings mit zwei der dargestellten Elemente und damit mit zwei LEDs 2a in Grund-, Auf- und Seitenriss. Die beiden LED-Linsen sind entlang ihres Randes, als Kontaktfläche 3i eingezeichnet, zu einem gemeinsamen Linsenteil verbunden, welches eine präzise Montage erleichtert, sie können aber auch lose einzeln nebeneinander angeordnet sein. In einer Ausführungsvariante kann eine solche LED-Linsenkombination auch Strahlenfenster 3g zur Beaufschlagung von Lichtsensoren 2c angeformt haben. Optional können die einzelnen oder verbundenen LED-Linsenelemente bezüglich der Sammellinse 9 konvergierende Lichtachsen aufweisen und so auch das Licht größerer LED-Linsenanordnungen präzise auf deren Eintrittsfläche 9a lenken. Für die weitere Ausgestaltung und das Verhalten bei einfallendem Sonnenlicht gelten die Ausführungen zur Fig. 8 sinngemäß. Aber auch Ausgestaltungsvarianten nach Fig. 9 und 10 können in dieser Bauweise umgesetzt werden.

Es ist evident, dass nur mit präzisen, hochtransparenten Optiken und Strukturen, sowie exakten, spielfreien Geometrien der Sonnenlicht-Eintritt in die LEDs möglichst weit hintan gehalten wird.

Ist in freier Umgebung die Sonne doch bis zum Horizont sichtbar, ist eine Dämpfung des dann entstehenden echten Phantomlichts durch Einsatz von Filterung möglich. Insbesonders kann die äußere Linse grautransparent eingefärbt werden, um einerseits das eindringende Licht zu reduzieren, andererseits das austretende Licht nochmals abzusenken, wobei davon auch das Nutzlicht betroffen ist und entsprechend heller ausgelegt werden muss. Die Signale können auch mit leichter Abwärtsneigung das Einsetzen des echten Phantomlichts reduzieren, doch ist ein völliges Vermeiden des echten Phantomlichts nicht mit einfachen Mitteln umsetzbar.

Das erfindungsgemäße Signal vermeidet das Auftreten von echtem Phantomlicht bei niedrigem Sonnenstand oberhalb eines Sonnenstandswinkels σ. Eine Minimierung dieses Winkels wird unter anderem mit einem möglichst großen Abstand der LED-Lichtquelle zum Lichtaustritt, also großer mittlerer Brennweite f der Austrittsoptik und einer sehr präzisen Linsengestaltung erreicht. Das Verzerren der Austrittsoptik um einen erheblichen Neigungswinkel α erzeugt einen im Mittel vergrößerten Lichtquellenabstand und damit eine Vergrößerung der Brennweite, ohne die eigentliche Bautiefe nach hinten zu erhöhen, sofern als gedachter Fixpunkt für die Austrittsoptik A das untere Ende der aus dem Stand der Technik bekannten Austrittsoptik A verwendet wird. So würde die Austrittsoptik A bei einem gedachten Übergang von der Fig. 1 auf die Fig. 3 im unteren Bereich festgehalten und oben nach vorne verzerrt. Diese Erklärung dient nur der Anschaulichkeit, denn hierdurch werden komplexe optische Gestaltungs-Simulationen notwendig. Jedoch ergibt sich ein geringerer Sonnenstandswinkel für das Einsetzen von echtem Phantomlicht als bisher. Überlegungen, Versuche und Simulationen haben gezeigt, dass eine Verzerrung der Austrittsoptik um einen Neigungswinkel von beispielsweise α=45° kein Reflexphantomlicht der ebenen Austrittsfläche selbst aus jeder vor einer typischen Signalleuchte liegenden üblichen Beobachtungsrichtung erzeugt, das Reflexlicht wird nach unten bzw. schräg nach hinten abgestrahlt, was im praktischen Einsatz nicht stört. Allerdings entsteht von innenliegenden Linsenflächen der Sammel- oder Streulinse ausgehend ebenfalls Reflexlicht, dessen Richtungen und Verbreitungszonen nicht mehr allein durch Überlegungen, sondern vor allem durch Simulation ermittelbar sind. Dieses Reflexlicht könnte in den Beobachtungsbereich B einstrahlen, was durch einen passenden Neigungswinkel α und eine eventuelle Aufteilung der Sammel- und Streulinsenstrukturen für jeden Sonnenstand vermeidbar ist. Es ist daher nötig, eine Sammellinse so schräg zu neigen und dahingehend zu gestalten, dass sie vom gesamten Beobachtungsbereich aus keinerlei Sonnenlicht-Reflexe ihrer Oberflächen erkennen lässt, und das optische System passend aufzubauen. Ein geringerer Neigungswinkel α ist bei einem vertikal niedrigen Beobachtungsbereich möglich. Ein größerer Neigungswinkel steigert die Lichtverluste durch zunehmende LED-Licht-Reflexion an optischen Grenzflächen ins Gehäuse und erhöht den Kompensationsaufwand gegen Lichtverteilungs-Verzerrungen bei der Gestaltung der Streustruktur. Der Neigungswinkel α sollte demnach so gering wie möglich gehalten sein, ein Bereich von etwa 15° bis 55° erscheint für bekannte Anwendungen als ausreichend. Die Bestimmung des Strahlengangs erfolgt mittels Brechungsindex und Snellius'schem Brechungsgesetz. Diese sind der Fachperson bekannt. Mittels Raytracing, einer bekannten Simulationsmethode, die beliebige Lichtstrahlen und deren Eigenschaften auf ihrem Weg durch eine Optik verfolgt, wird dadurch eine Licht- und Reflexlichtsimulation möglich. Bleibt ein Lichtstrahl innerhalb des Beobachtungsbereichs B, sind involvierte Oberflächen in ihrer Neigung zu verändern, bis das nicht mehr der Fall ist (siehe auch Beschreibung von Fig. 5).

Zur besseren Verständlichkeit wird der Strahlengang in den dargestellten Beispielen fast nur anhand von Vertikalschnitten und einer oberhalb der optischen Achse stehenden Sonne erläutert. Tatsächlich handelt es sich dabei aber nur um die Vertikalkomponenten der Lichtstrahlen. Die Horizontalkomponenten betreffen die gezeigten Effekte insofern, als schräg ins Signal einfallende Sonnenstrahlen deutlich geringere, dafür aber auch andere Stör-Reflexe seitlich der Mitte erzeugen, da sie die Lichtquelle nur teilweise treffen oder zum großen Teil seitlich an ihr vorbeilaufen und dort absorbiert werden, jedoch bei seitlichem Auftreffen auf Linsenelemente auch seitliche Reflexlichtstrahlen in der Austrittsoptik mit unabschätzbarem Verlauf erzeugen. Eine größere Horizontalstreuung des Lichts führt grundsätzlich zu einer Reduktion der auf die LED-Linse fallenden Sonnenstrahlen, weil auch diese mehr gestreut werden. Während die früheren und bisherigen Signalleuchten-Optiken mit einfachen Mitteln und Formeln festgelegt wurden, kommt die vorgestellte Erfindung nicht ohne computergestützte Verfahren zur Simulation der Strahlengänge aus, wie die übergroße Schrägstellung der Austrittsoptik eine Fachperson schon vermuten lässt. Hiervon ist nicht nur die Sammellinse betroffen, sondern auch die Streulinse, welche bei einer solchen Schrägstellung mit bekannten einfachen Streustrukturen und Berechnungen eine erhebliche vertikale Verzerrung des horizontal gestreuten Lichts erzeugen würde, was mit geeigneten Maßnahmen an der Geometrie der Streuelemente auskorrigiert werden muss.

Die Erfindung ist nicht auf die dargestellten Ausführungsformen beschränkt. Jede erfindungsgemäße Signalleuchte enthält zumindest eine Sammellinsenstruktur 9b und meistens eine Streulinsenstruktur 10a. Beide Strukturen können in ihrer Wirkung aufgeteilt und unterschiedlichen Linsenflächen zugeordnet werden. Beispielsweise können auf beiden Seiten der Sammellinse 9 lichtbündelnde Teilstrukturen vorgesehen werden, welche zusammen die an jeder Stelle nötige Brechkraft aufweisen. Durch diese Gestaltungsmöglichkeiten können die Neigungen der Prismen-Elemente und der Linsenfläche bei gleicher Brechkraft verändert und somit der Verlauf der Reflex-Lichtstrahlen beeinflusst werden. Die Strukturen können aus quadratischen, rechteckigen, dreieckigen oder hexagonalen Flächenelementen mit prismatisch erscheinenden Verbindungsflächen bestehen. Es sind aber auch bogenförmig begrenzte Flächenelemente möglich. Ebenso können auch zwei oder mehr Streulinsenstrukturen vorgesehen sein, wenn deren Summenwirkung den Anforderungen entspricht. Streulinsenstrukturen können auch den Sammellinsenstrukturen überlagert werden. Damit kann man etwa komplizierte Lichtverteilungen aus einfachen bzw. einfach herstellbaren Strukturen aufbauen, oder besonders starke Streuwirkungen aufteilen. Sammellinse 9 und Streulinse 10 können technologisch auch in leicht gekrümmter Form aufgebaut werden. Hierdurch kann insbesondere die Seitensichtbarkeit erhöht und die Stabilität gegen Vandalismus verbessert werden. Übliche Krümmungsverhältnisse sind solche Krümmungen deren Ausbauchung im Verhältnis zur größeren Länge der Austrittsfläche 10b die Relation 1:10 nicht überschreitet. Natürlich können auch mehrere Scheiben mit nur einseitig vorhandener Struktur vorgesehen sein. Werden mehrere unterschiedliche Lichtverteilungen benötigt, so kann ein adäquates Baukastensystem von auswechselbaren oder kombinierbaren Sammel- und Streulinsen vorgesehen werden.

Im Fall geringer Streuung, hoher Bündelung und sehr engem Beobachtungsbereich kann auch eine kombinierte, geneigte Sammel- und Streulinse verwendet werden, wie dies in Fig. 1 für den Stand der Technik dargestellt ist. Kann die Streustruktur auf der Innenseite der Linse mit der Sammellinsenstruktur überlagert werden, ist die Außenseite der Linse weiterhin glatt. Eine reinigungsfreundliche Streustruktur kann aber auch auf der Außenseite der Linse aufgebracht sein.

Weitere nicht dargestellte Ausführungen der Erfindung sind etwa das Vorsetzen einer Mineralglasscheibe in der Schräge der Austrittsoptik, als leicht auswechselbares Teil ähnlich der bekannten Schweißschirme in besonders aggressiver Umgebung gegen Funkeneinbrand oder das Vorhandensein einer Spezialbeschichtung gegen Ablagerungen auf der Austrittsfläche 10b, oder eine Filterwirkung durch Elemente der Austrittsoptik A oder der LED-Linse 3 durch transparente Einfärbung in der Signallichtfarbe oder in Neutralgrau zur Reduktion der Helligkeit. Als Lichtfarben kommen bei Bahnsignalen Rot, Gelb, Grün, Cyan, Blau, Weiß, Orange, und Violett oftmals in verschiedenen Nuancen zur Anwendung.

Die LED-Lichtquelle 2 kann auch aus LEDs unterschiedlicher Farben aufgebaut sein, wobei vorzugsweise alle LEDs einer Farbe gemeinsam geschaltet werden. Mit einer solchen Mehrfarben-Signalleuchte kann ein bestimmtes Signalbild mit weniger Lichtpunkten als bisher aufgebaut werden.

Als Sensoren 2b und 2c kommen sämtliche aus dem Stand der Technik bekannten Lichtsensoren in Betracht, die die Anforderungen an Bauraum und spektraler Lichtempfindlichkeit erfüllen.

Die Erfindung kann aus allen auch bisher für die jeweiligen Zwecke eingesetzten Materialien gefertigt werden und benötigt somit keinen Mehraufwand.

Die Neigung der Austrittsoptik erzeugt nicht nur die erläuterte Verbesserung der Erkennbarkeit aus der Ferne durch Vermeidung von Sonnenreflexen, sondern auch eine gute Sichtbarkeit aus der Nähe, da sie sich dem vor allem unterhalb befindlichen Beobachter zuwendet. Eine solche Signalleuchte hat durch den Entfall üblicher Sonnenblenden auch erhebliche wirtschaftliche Vorteile, insbesondere vergrößerte Reinigungsintervalle, da sich einerseits weniger Schmutz, Schnee oder Eis anlegen kann, andererseits durch leichteren Zutritt von Regenwasser und damit bessere Selbstreinigung, wodurch die extrem lange Lebensdauer der LED-Lichtquelle erst wirtschaftlich nutzbar wird. Da die Signalleuchte selbst ein viel geringeres Phantomlicht aufweist als ein herkömmliches Signal mit übergroßen Sonnenblenden, führt deren Entfall zu weiteren Einsparungen an Folgekosten in der Infrastruktur durch Gewichtseinsparung und geringeren Windkräften vorbeifahrender Züge auf den Signalmast, wodurch auch eine höhere Zuggeschwindigkeit ermöglicht wird.

Die Austrittsfläche 10b kann zusätzlich in bekannten Verfahren etwa durch Bedampfen, Bestrahlen oder Lackieren erzeugte Schutzschichten aufweisen, welche die Oberfläche glätten, entspiegeln, kratzfester und reinigungsfreundlicher und/oder sie gegen Funkenflug, Bremsstaub, Abgase und chemische Beanspruchungen wie Seewasser widerstandsfähiger machen, wodurch die Austrittsfläche qualitativ höherwertig und langlebiger wird, oder durch eine auswechselbare vorgesetzte Planglasscheibe vor Beschädigung geschützt werden. Als glatt wird hier eine Oberfläche in Spiegelqualität bezeichnet, also eine Rauheit von etwa *Rₐ* ≤ 0.2 *µm* nach EN ISO 1302 besitzt, die eben oder leicht gekrümmt ist. Als reinigungsfreundlich wird hier eine Oberfläche bezeichnet, wenn sie spiegelglatte, stetig verlaufende geometrische Oberflächen ohne Vertiefungen und Rillen aufweist, aus denen abgelagerter Schmutz nicht einfach weggewischt werden könnte. Alle diese Gestaltungsmöglichkeiten sind der Fachperson bekannt und stellen keine abschließende Aufzählung dar.

Als gleichmäßig helle Beleuchtung der Austrittsoptik A wird in dieser Anmeldung verstanden, dass ein Beobachter der leuchtenden Austrittsfläche (10b) keine auffälligen Helligkeitsunterschiede erkennen kann.

Der Begriff: "Kombination" bzw. "Kombinationen" steht, sofern nichts anderes angegeben, für alle Arten von Kombinationen, ausgehend von zwei der betreffenden Bestandteile bis zu einer Vielzahl oder aller derartiger Bestandteile, der Begriff: "enthaltend" steht neben seiner ursprünglichen Bedeutung auch für "bestehend aus".

Die in den einzelnen Ausgestaltungen und Beispielen angegebenen Merkmale und Varianten können mit denen der anderen Beispiele und Ausgestaltungen frei kombiniert und insbesondere zur Kennzeichnung der Neuerung in den Ansprüchen ohne zwangläufige Mitnahme der anderen Details der jeweiligen Ausgestaltung bzw. des jeweiligen Beispiels verwendet werden.

In der Beschreibung und den Ansprüchen werden die Begriffe "vorne", "hinten", "oben", "unten", "vertikal", "horizontal" und so weiter in der landläufigen Form und unter Bezugnahme auf den Gegenstand in seiner üblichen Gebrauchslage verwendet.

Die Anmeldung umfasst auch geometrisch geringfügige Abweichungen durch fertigungsübliche Toleranzen, insbesonders die Ebenheit der Linsen betreffend.

### Liste der Bezugszeichen:

| | | | |
|---|---|---|---|
| 1 | Gehäuse | 9b | Sammellinsenstruktur, Kuppe |
| 1a | vordere Begrenzungsfläche | 9c | Fresnelringe2d |
| 1b | Fortsatz | 10 | Streulinse/Streuscheibe |
| 1c | Abdeckung | 10a | Streulinsenstruktur |
| 2 | LED-Lichtquelle | 10b | Austrittsfläche |
| 2a | LEDs | 10c | überlagerte Streustruktur |
| 2b | Sonnenlichtsensor | 11 a,b | Verbindungsflächen |
| 2c | LED-Lichtsensor | 12 a,b,c | LED-Lichtstrahlen |
| 2d | LED-Platine | 13 a,b,c,d | Sonnenstrahlen |
| 3 | LED-Linse | 14 a,b,c,d,e | Reflexlichtstrahlen |
| 3a | Eintrittsfläche | 15 | Heizung |
| 3b | Austrittsfläche | 16 | Absorbierende Oberfläche |
| 3c | Eintrittsflächenkante | 17 | Sonnenblende |
| 3d | Mantelfläche | A | Austrittsoptik |
| 3e | Absorptionsschicht | f | Brennweite |
| 3f | Schräge | G | Sonnenbrennfleck |
| 3g | Strahlenfenster | H | Horizontale Achse |
| 3h | LED-Linsen-Seitenfläche | V | Vertikale Achse |
| 3i | LED-Linsen-Kontaktfläche | cd | Isocandela-Kurven |
| 4 | wärmeverteilende Auflagefläche | α | Neigungswinkel |
| 5 | Kühlkörper | σ | Sonnenstandswinkel |
| 6 | elektronische Ansteuerung | O | Optische Achse |
| 7 | elektrischer Anschluss | L | Lichtachse der LED-Lichtquelle |
| 8a,b | elektrische Verbindung | B | Beobachtungsbereich |
| 9 | Sammellinse/Kondensorlinse | F | Fokuspunkt |
| 9a | Eintrittsfläche Sammellinse | T | Trägerscheibe |

## Patentansprüche

1. Signalleuchte zur visuellen Übermittlung von Informationen an Fahrzeugführer, auch über größere Entfernungen, enthaltend eine kompakte LED-Lichtquelle (2) mit dichter LED-Packung samt zugehöriger elektronischer Ansteuerung (6) und eine lichtbündelnde und lichtverteilende Optik A mit einer Lichtaustrittsfläche (10b), in einem Gehäuse (1) mit Befestigungs- und/oder Einstellmöglichkeit, mit einer definierten optischen Achse (O) zur horizontalen und seitlichen Ausrichtung und einer hochgebündelten Lichtabstrahlung in Richtung dieser optischen Achse (O), wobei
die Austrittsoptik (A) zumindest eine Sammellinse (9) mit einem Brennpunkt (F) aufweist, in dem die LED-Lichtquelle (2) mit einer unmittelbar vorgesetzten LED-Linse (3) angeordnet ist, und sie zumindest eine Streulinse (10) enthält, welche das Licht nach einer vordefinierten Helligkeitsverteilung in einen Beobachtungsbereich (B) lenkt,
**dadurch gekennzeichnet,**
**dass** die Austrittsoptik (A) geometrisch um einen vertikalen Neigungswinkel (α) zwischen 15° und 55° schräg verzerrt ist.

2. Signalleuchte nach Anspruch 1, **dadurch gekennzeichnet, dass** die Sammellinse (9) und die Streulinse (10) denselben Neigungswinkel (α) aufweisen.

3. Signalleuchte nach Anspruch 1 oder 2, **dadurch gekennzeichnet, dass** bei Sonnenlichteinfall in die ausgerichtete Leuchte oberhalb eines Sonnenstands-Grenzwinkels (σ), die durch die LED-Linse (3) und Austrittsoptik (A) erzeugten Reflexlichtstrahlen, beim vorliegenden Verzerrungswinkel (α) außerhalb des Beobachtungsbereiches (B) gelenkt werden.

4. Signalleuchte nach mindestens einem der Ansprüche 1 bis 3, **dadurch gekennzeichnet, dass** der Brennpunkt (F) auf oder vertikal oberhalb/unterhalb der optischen Achse (O) liegt.

5. Signalleuchte nach mindestens einem der Ansprüche 1 bis 4, **dadurch gekennzeichnet, dass** die geneigte Austrittsfläche (10b) glatt ist, oder eine reinigungsfreundliche Oberfläche aufweist.

6. Signalleuchte nach einem oder mehreren Ansprüchen 1 bis 5, **dadurch gekennzeichnet, dass** die Austrittsfläche (10b) eben ist.

7. Signalleuchte nach einem oder mehreren Ansprüchen 1 bis 5, **dadurch gekennzeichnet, dass** die Austrittsfläche (10b) leicht gekrümmt ausgeführt ist, wobei unter einer leichten Krümmung eine Krümmung verstanden wird, die ein Verhältnis von Ausbauchung zur größeren Länge der Austrittsfläche (10b) von 1:10 nicht überschreitet.

8. Signalleuchte nach Anspruch 6 oder 7, **dadurch gekennzeichnet, dass** eine Begrenzungsfläche (1a) des Gehäuses (1) nach vorne als tangential anschließende Weiterführung der Austrittsfläche (10b) ausgeführt ist.

9. Signalleuchte nach einem oder mehreren Ansprüchen 1 bis 8, **dadurch gekennzeichnet, dass** die Wirkung der Sammellinse (9) durch eine auf einer Trägerscheibe (T) angeordnete Sammellinsenstruktur (9b) erzielt wird, welche aus Flächenelementen besteht, die an jeder Stelle die notwendige Brechkraft erzeugen.

10. Signalleuchte nach Anspruch 9, **dadurch gekennzeichnet, dass** die Sammellinsenstruktur (9b) aus rechteckigen, quadratischen, hexagonalen oder dreieckigen, oder auch beliebig gestalteten, prismatisch umgrenzten Flächenelementen in lückenloser Anordnung unter Ausbildung von Verbindungsflächen (11a, 11b) besteht.

11. Signalleuchte nach Anspruch 9 oder 10, **dadurch gekennzeichnet, dass** die Flächenelemente der Sammellinsenstruktur (9b) Ebenen sind.

12. Signalleuchte nach einem oder mehreren Ansprüchen 1 bis 8, **dadurch gekennzeichnet, dass** die Funktion der Sammellinse (9) durch mehrere Sammellinsenstrukturen (9b) erzielt wird, welche in ihrer Summenwirkung an jeder Stelle die notwendige Brechkraft erzeugen.

13. Signalleuchte nach einem oder mehreren Ansprüchen 1 bis 12, **dadurch gekennzeichnet, dass** die lichtverteilende Wirkung der Streulinse (10) durch eine auf einer Trägerscheibe (T) angeordnete Streulinsenstruktur (10a), bestehend aus gleichartigen Flächenelementen mit derselben Lichtlenkungscharakteristik in lückenloser regelmäßiger Anordnung gebildet wird.

14. Signalleuchte nach Anspruch 13, **dadurch gekennzeichnet, dass** die Anordnung der Flächenelemente der Streulinsenstruktur (10a) in einem rechteckigen, quadratischen oder hexagonalen Raster erfolgt.

15. Signalleuchte nach einem oder mehreren Ansprüchen 1 bis 12, **dadurch gekennzeichnet, dass** die Funktion der Streulinse (10) durch mehrere Streulinsenstrukturen (10a) erzielt wird, welche in ihrer Summenwirkung eine vordefinierte Lichtverteilung im Beobachtungsbereich (B) erzeugen.

16. Signalleuchte nach einem oder mehreren Ansprüchen 12 bis 15, **dadurch gekennzeichnet, dass** eine Streustruktur (10a) einer Sammellinsenstruktur (9b) geometrisch überlagert ist.

17. Signalleuchte nach einem oder mehreren Ansprüchen 1 bis 16, **dadurch gekennzeichnet, dass** die Austrittsoptik (A) nur aus einer Trägerscheibe (T) besteht oder aus mehreren Trägerscheiben (T) zusammengesetzt ist, deren Ein- und Austrittsflächen mit den Sammellinsen- (9b) und Streulinsen-Strukturen (10a) versehen sind und die Austrittsfläche (10b) vorzugsweise glatt ist, oder eine reinigungsfreundliche Oberfläche mit stetigem Verlauf aufweist.

18. Signalleuchte nach Anspruch 17, **dadurch gekennzeichnet, dass** die Austrittsoptik (A) eine separate Sammellinse (9) mit innen glatter Oberfläche und außenliegender Sammellinsenstruktur (9b) und nachfolgend eine Streulinse (10) mit außen glatter Austrittsfläche (10b) und innenliegender Streulinsenstruktur (10a) aufweist.

19. Signalleuchte nach Anspruch 17, **dadurch gekennzeichnet, dass** die Austrittsoptik (A) aus einer einzigen Trägerscheibe (T) besteht, welche innen die Sammellinsenstruktur (9b) mit überlagerter Streustruktur (10c) aufweist und außen glatt ist.

20. Signalleuchte nach einem oder mehreren Ansprüchen 1 bis 19, **dadurch gekennzeichnet, dass** der Austrittsoptik (A) eine leicht auswechselbare Glasscheibe mit gleichem Neigungswinkel (α) als Schutz vor Kratzern und Ablagerungen vorgesetzt ist, oder die Austrittsfläche (10b) eine Schutzbeschichtung gegen Kratzer und Ablagerungen aufweist.

21. Signalleuchte nach einem oder mehreren Ansprüchen 17 bis 20, **dadurch gekennzeichnet, dass** die Trägerscheiben (T) der Austrittsoptik (A) mit ein- oder beidseitig angeordneten Sammellinsenstrukturen (9b) oder Streulinsenstrukturen (10a) ein Baukastensystem bilden.

22. Signalleuchte nach einem oder mehreren Ansprüchen 1 bis 21, **dadurch gekennzeichnet, dass** die der LED-Lichtquelle (2) unmittelbar vorgesetzte LED-Linse (3) einen vorzugsweise ebenen LED-Lichteintritt (3a) und eine Freiform-Oberfläche (3b) als Lichtaustritt aufweist.

23. Signalleuchte nach einem oder mehreren Ansprüchen 1 bis 22, **dadurch gekennzeichnet, dass** die LED-Lichtquelle (2) mit der unmittelbar vorgesetzten LED-Linse (3) einen Lichtverteilungs- und Intensitätsverlauf erzeugt, welcher die gesamte Austrittsoptik (A) gleichmäßig hell beleuchtet.

24. Signalleuchte nach einem oder mehreren Ansprüchen 1 bis 23, **dadurch gekennzeichnet, dass** pro LED (2) eine LED-Linse (3) vorgesehen ist, welche beidseitig durch Grenzflächen (3h) begrenzt ist, welche über Totalreflexion der darauf treffenden LED-Lichtstrahlen (12) zusammen mit den direkt durchgehenden LED-Lichtstrahlen eine gleichwertige Lichtstrahlenverteilung (12a) erzeugt wie eine massive LED-Linse.

25. Signalleuchte nach Anspruch 24, **dadurch gekennzeichnet, dass** mehrere seitlich begrenzte LED-Linsen (3) über ihre Kontaktflächen (3i) miteinander zu einem einzigen Bauteil verbunden sind.

26. Signalleuchte nach einem oder mehreren Ansprüchen 1 bis 25, **dadurch gekennzeichnet, dass** die Intensitäten der von der LED-Linse (3) austretenden Lichtstrahlen (12a) im Wesentlichen proportional sind zum Produkt des Entfernungsquadrats bis zu deren Auftreffpunkten auf der um den Neigungswinkel (α) schräg verzerrten Eintrittsfläche (9a) der Austrittsoptik (A) und dem Kehrwert des Cosinus der Auftreffwinkel der Lichtstrahlen ebendort.

27. Signalleuchte nach einem oder mehreren Ansprüchen 21 bis 26, **dadurch gekennzeichnet, dass** die Lichteintrittsfläche (3a) der LED-Linse (3) unmittelbar mit dem unteren Rand der LED-Anordnung horizontal abschließt, oder dort ein Licht absorbierender Bereich anschließt.

28. Signalleuchte nach einem oder mehreren Ansprüchen 21 bis 27, **dadurch gekennzeichnet, dass** zumindest die Fläche unterhalb des LED-Lichteintritts-bereichs (3a) und optional die Mantelfläche (3d) der LED-Linse (3) schwarzmatt und lichtabsorbierend beschichtet ist, oder diese Flächen optisch an eine Licht absorbierende Oberfläche eines Wärme ableitenden Bauteiles angebunden sind.

29. Signalleuchte nach einem oder mehreren Ansprüchen 21 bis 27, **dadurch gekennzeichnet, dass** die Mantelfläche (3d) der LED-Linse (3) in ihrem unteren Bereich zwischen Lichteintrittsfläche (3a) und Austrittslinsenfläche (3b) eine Schräge (3f) aufweist, welche darauf treffende Sonnenstrahlen durch Totalreflexion aus der LED-Linse (3) lenkt.

30. Signalleuchte nach einem oder mehreren Ansprüchen 1 bis 29, **dadurch gekennzeichnet, dass** die LED-Lichtquelle (2) samt der LED-Linse (3) und einer der LED-Linse (3) zuzuordnenden Lichtachse (L), sowie der Brennpunkt (F) um die Mitte der Austrittsoptik (A) in den oberen Bereich der Signalleuchte verschwenkt sind, und die LED-Lichtquelle (2) unmittelbar an dem die Signalleuchten-Rückseite bildenden Kühlkörper (5) thermisch leitend anliegt.

31. Signalleuchte nach Anspruch 30, **dadurch gekennzeichnet, dass** im Freiraum unterhalb der LED-Lichtquelle (2) und LED-Linse (3) die Ansteuerungselektronik (6) untergebracht ist, welche durch eine wärmeleitende, Licht absorbierende Abdeckung (1c) vor Sonnenstrahlen geschützt wird.

32. Signalleuchte nach einem oder mehreren Ansprüchen 21 bis 31, **dadurch gekennzeichnet, dass** in Nähe der LED-Lichtquelle (2) optische Sensoren (2b, 2c) angeordnet sind, welche durch ihre Positionen und der Anordnung von Fenstern (3g) in Eintrittsfläche (3a) oder Mantelfläche (3d) der LED-Linse (3) entweder von an LED-Linsen-Flächen reflektierten Sonnenstrahlen, oder von an LED-Linsen-Flächen reflektierten LED-Lichtstrahlen angestrahlt werden.

33. Signalleuchte nach einem oder mehreren Ansprüchen 1 bis 32, **dadurch gekennzeichnet, dass** die LED-Linse (3), oder ein Linsenteil der Austrittsoptik (A) aus einem in der LED-Lichtfarbe transparent eingefärbten Material, oder aus einem transparent, neutralgrau eingefärbten Material ausgeführt ist.

34. Signalleuchte nach einem oder mehreren Ansprüchen 1 bis 33, **dadurch gekennzeichnet, dass** die LED-Lichtquelle (2) aus LEDs unterschiedlicher Farben oder Farb-kombinierten LEDs in dichter Anordnung besteht, wobei die LEDs gleicher Farbe jeweils separat ansteuerbar sind.

35. Signalleuchte nach einem oder mehreren Ansprüchen 1 bis 34, **dadurch gekennzeichnet, dass** die LED-Lichtquelle (2) in COB-Technik ausgeführt ist.

36. Signalleuchte nach einem oder mehreren Ansprüchen 1 bis 35, **dadurch gekennzeichnet, dass** innerhalb des Gehäuses (1), außerhalb des Lichtkegels, im nach vorne vorstehenden Gehäusebereich eine elektrisch aktivier- und regelbare Heizung (15) angeordnet ist.

37. Signalleuchte nach Anspruch 36, **dadurch gekennzeichnet, dass** die Heizung (15) als Heizstab, Heizdraht, Heizfolie, Leistungswiderstände auf einer Platine oder als Infrarotstrahler ausgeführt ist.

## Claims

1. Signal light for visual transmission of information to vehicle drivers, even over longer distances, containing a compact LED light source (2) with a dense LED packing including associated electronic control (6) and a light-bundling and light-distributing optics A with a light exit surface (10b), in a housing (1) with fastening and/or adjustment capabilities, with a defined optical axis (O) for horizontal and lateral alignment and a highly focussed light emission in the direction of this optical axis (O), wherein
the light exit optics (A) has at least one converging lens (9) with a focal point (F), in which the LED light source (2) is arranged with a LED lens (3) placed directly in front, and it contains at least one diffusing lens (10) that directs the light into an observation area (B) according to a predefined brightness distribution,
**characterized in that**,
the exit optics (A) is geometrically skewed by a vertical angle of inclination (α) between 15° and 55°.

2. Signal light according to claim 1, **characterized in that** the converging lens (9) and the diffusing lens (10) have the same angle of inclination (α).

3. Signal light according to claim 1 or 2, **characterized in that**, in the case of incidence of sunlight into the aligned light above a critical sun position angle (σ), the reflected light rays generated by the LED lens (3) and the exit optics (A) are directed to the outside of the observation area (B), when an angle of distortion (α) is present.

4. Signal light according to at least one of claims 1 to 3, **characterized in that** the focal point (F) lies on or vertically above/below the optical axis (O).

5. Signal light according to at least one of claims 1 to 4, **characterized in that** the inclined exit surface (10b) is smooth or has a surface that is easy to clean.

6. Signal light according to any one of claims 1 to 5, **characterized in that** the exit surface (10b) is flat.

7. Signal light according to any one of claims 1 to 5, **characterized in that** the exit surface (10b) is designed to be slightly curved, wherein a slight curvature is understood to mean a curvature that does not exceed a ratio of bulge to the greater length of the exit surface (10b) of 1:10.

8. Signal light according to claim 6 or 7, **characterized in that** a periphery (1a) of the housing (1) is designed as a subsequent tangential continuation of the exit surface (10b) towards the front.

9. Signal light according to any one of claims 1 to 8, **characterized in that** the effect of the converging lens (9) is achieved by a converging lens structure (9b) that is arranged on a carrier disk (T) that consists of surface elements that generate the necessary refractive power at each location.

10. Signal light according to claim 9, **characterized in that** the converging lens structure (9b) consists of rectangular, square, hexagonal or triangular, or arbitrarily designed, prismatically defined surface elements in a seamless arrangement to form connecting surfaces (11a, 11b).

11. Signal light according to claim 9 or 10, **characterized in that** the surface elements of the converging lens structure (9b) are planes.

12. Signal light according to any one of claims 1 to 8, **characterized in that** the function of the converging lens (9) is achieved by a several converging lens structures (9b) that generate the necessary refractive power at each location due to their cumulative effect.

13. Signal light according to any one of claims 1 to 12, **characterized in that** the light-distributing effect of the diffusing lens (10) is achieved by a diffusing lens structure (10a) that is arranged on a carrier disk (T), consisting of similar surface elements with the same light directing characteristics in a seamless, regular arrangement.

14. Signal light according to claim 13, **characterized in that** the arrangement of the surface elements of the diffusing lens structure (10a) occurs in a rectangular, square or hexagonal grid.

15. Signal light according to any one of claims 1 to 12, **characterized in that** the function of the diffusing lens (10) is achieved by a several diffusing lens structures (10a) that generate a predefined light distribution in the observation area (B) due to their cumulative effect.

16. Signal light according to any one of claims 12 to 15, **characterized in that** a diffusing structure (10a) is geometrically superimposed on a converging lens structure (9b).

17. Signal light according to any one of claims 1 to 16, **characterized in that** exit optics (A) consists only of one carrier disk (T) or is composed of several carrier disks (T), wherein the entry and exit surfaces thereof are provided with the converging lens structure (9b) and the diffusing lens structure (10a), and, preferably, wherein the exit surface (10b) is smooth or has a surface that is easy to clean and has a continuous contour.

18. Signal light according to claim 17, **characterized in that** the exit optics (A) has a separate converging lens (9) with a smooth internal surface and an external converging lens structure (9b) and subsequently a diffusing lens (10) with a smooth external exit surface (10b) and an internal diffusing lens structure (10a).

19. Signal light according to claim 17, **characterized in that** the exit optics (A) consists of a single carrier disk (T) that has the converging lens structure (9b) with a superimposed diffusing structure (10c) on the inside and is smooth on the outside.

20. Signal light according to any one of claims 1 to 19, **characterized in that** an easily replaceable glass pane with the same angle of inclination (α) is placed in front of the exit optics (A) as protection against scratches and deposits, or the exit surface (10b) has a protective coating against scratches and deposits.

21. Signal light according to any one of claims 17 to 20, **characterized in that** the carrier disks (T) of the exit optics (A) form a modular system with converging lens structures (9b) or diffusing lens structures (10a) arranged on one or both sides.

22. Signal light according to any one of claims 1 to 21, **characterized in that** the LED lens (3) placed directly in front of the LED light source (2) preferably has a flat LED light entry (3a) and a free-form surface (3b) as a light exit.

23. Signal light according to any one of claims 1 to 22, **characterized in that** the LED light source (2) with the LED lens (3) placed directly in front generates a light distribution and intensity curve that illuminates the entire exit optics (A) evenly bright.

24. Signal light according to any one of claims 1 to 23, **characterized in that** for each LED (2) one LED lens (3) is provided that is limited on both sides by boundary surfaces (3h) and that generates a light ray distribution (12a) equivalent to a solid LED lens by total reflection of the LED light rays (12) incident on it together with the LED light rays directly passing therethrough.

25. Signal light according to claim 24, **characterized in that** several laterally limited LED lenses (3) are connected to one another via their contact surfaces (3i) to form a single component.

26. Signal light according to any one of claims 1 to 25, **characterized in that** the intensities of the light rays (12a) exiting from the LED lens (3) are essentially proportional to the product of the distance square up to their points of incidence on entry surface (9a) of the exit optics (A), which is skewed by the angle of inclination (α), and the reciprocal of the cosine of the angle of incidence of the light rays there.

27. Signal light according to any one of claims 21 to 26, **characterized in that** the light entry surface (3a) of the LED lens (3) ends horizontally directly with the lower edge of the LED arrangement, or a light-absorbing area follows there.

28. Signal light according to any one of claims 21 to 27, **characterized in that** at least the surface below the LED light entry area (3a) and optionally the lateral surface (3d) of the LED lens (3) is coated flat black and light-absorbing, or these surfaces are optically connected to a light-absorbing surface of a heat-dissipating component.

29. Signal light according to any one of claims 21 to 27, **characterized in that** the lateral surface (3d) of the LED lens (3) has a slope (3f) in its lower area between the light entry surface (3a) and the lens exit surface (3b), which directs the sunrays incident on it out of the LED lens (3) by total reflection.

30. Signal light according to any one of claims 1 to 29, **characterized in that** the LED light source (2) including the LED lens (3) and a light axis (L) to be assigned to the LED lens (3), as well as the focal point (F) are pivoted around the centre of the exit optics (A) into the upper area of the signal light, and the LED light source (2) rests in a thermally conductive manner directly against the heat sink (5) forming the back of the signal light.

31. Signal light according to claim 30, **characterized in that** the control electronics (6), which is protected from the sunrays by a heat-conducting, light-absorbing cover (1c), is accommodated in the free space below the LED light source (2) and LED lens (3).

32. Signal light according to any one of claims 21 to 31, **characterized in that** optical sensors (2b, 2c) are arranged in the vicinity of the LED light source (2), which are illuminated by either sunrays reflected on LED lens surfaces or by LED light rays reflected on LED lens surfaces depending on their positions and the arrangement of windows (3g) in the entry surface (3a) or lateral surface (3d) of the LED lens (3).

33. Signal light according to any one of claims 1 to 32, **characterized in that** the LED lens (3) or a lens part of the exit optics (A) made of a material coloured transparently in the colour of the LED light or of a material coloured transparently in neutral grey.

34. Signal light according to any one of claims 1 to 33, **characterized in that** the LED light source (2) consists of LEDs of different colours or colour-combined LEDs in a dense arrangement, wherein the LEDs of the same colour are each separately controllable.

35. Signal light according to any one of claims 1 to 34, **characterized in that** the LED light source (2) is designed in COB technology.

36. Signal light according to any one of claims 1 to 35, **characterized in that** a heater (15) that can be electrically activated and controlled is arranged within the housing (1), outside of the light cone, in the housing area projecting towards the front.

37. Signal light according to claim 36, **characterized in that** the heater (15) is designed as a heating rod, heating wire, heating foil, power resistors on a circuit board or as an infrared radiator.

## Revendications

1. Feu de signalisation destiné à la transmission visuelle d'informations à des conducteurs de véhicules, y compris sur de grandes distances, comportant une source lumineuse à LED (2) compacte avec une disposition serrée des LED, y compris la commande (6) électronique associée, et un élément optique A focalisant la lumière et distribuant la lumière, muni d'une surface de sortie de lumière (10b), dans un boîtier (1) doté d'une possibilité de fixation et/ou de réglage, avec un axe optique (O) défini, en vue de l'alignement horizontal et latéral, et une émission lumineuse fortement focalisée en direction de cet axe optique (O), sachant que l'élément optique de sortie (A) présente au moins une lentille convergente (9) comportant un foyer (F) dans lequel est disposée la source lumineuse à LED (2) avec une lentille LED (3) placée directement devant, et qu'il contient au moins une lentille divergente (10) qui dirige la lumière dans une zone d'observation (B), après une distribution de lumière prédéfinie, **caractérisé en ce que** l'élément optique de sortie (A) est déformé géométriquement en biais sous un angle d'inclinaison (α) vertical compris entre 15° et 55°.

2. Feu de signalisation selon la revendication 1, **caractérisé en ce que** la lentille convergente (9) et la lentille divergente (10) présentent le même angle d'inclinaison (α).

3. Feu de signalisation selon la revendication 1 ou 2, **caractérisé en ce que**, en cas de rayonnement solaire incident dans le feu aligné, au-dessus d'un angle limite de position du soleil (σ), les rayons lumineux réfléchis générés par la lentille LED (3) et l'élément optique de sortie (A) sont dirigés vers l'extérieur de la zone d'observation (B), en présence de l'angle de distorsion (α) existant.

4. Feu de signalisation selon au moins une des revendications 1 à 3, **caractérisé en ce que** le foyer (F) se situe sur l'axe optique (O) ou verticalement au-dessus/en dessous.

5. Feu de signalisation selon au moins une des revendications 1 à 4, **caractérisé en ce que** la surface de sortie (10b) inclinée est lisse ou présente une surface facile à nettoyer.

6. Feu de signalisation selon une ou plusieurs des revendications 1 à 5, **caractérisé en ce que** la surface de sortie (10b) est plane.

7. Feu de signalisation selon une ou plusieurs des revendications 1 à 5, **caractérisé en ce que** la surface de sortie (10b) est réalisée sous une forme légèrement incurvée, où on entend par « courbure légère » une courbure qui ne dépasse pas un rapport de 1 à 10 entre le renflement et la longueur plus grande de la surface de sortie (10b).

8. Feu de signalisation selon la revendication 6 ou 7, **caractérisé en ce qu'**une surface de délimitation (1a) du boîtier (1) est réalisée vers l'avant comme prolongement de la surface de sortie (10b) se raccordant de façon tangentielle.

9. Feu de signalisation selon une ou plusieurs des revendications 1 à 8, **caractérisé en ce que** l'action de la lentille convergente (9) est obtenue avec une structure de lentille convergente (9b) qui est disposée sur un disque support (T) et est constituée d'éléments de surface qui produisent à chaque emplacement la force réfractive nécessaire.

10. Feu de signalisation selon la revendication 9, **caractérisé en ce que** la structure de lentille convergente (9b) est constituée d'éléments de surface rectangulaires, carrés, hexagonaux ou triangulaires, ou ayant une forme quelconque, délimités de façon prismatique, dans une disposition sans interstices, en formant des surfaces de liaison (11a, 11b).

11. Feu de signalisation selon la revendication 9 ou 10, **caractérisé en ce que** les éléments de surface de la structure de lentille convergente (9b) sont des plans.

12. Feu de signalisation selon une ou plusieurs des revendications 1 à 8, **caractérisé en ce que** la fonction de la lentille convergente (9) est obtenue avec plusieurs structures de lentille convergente (9b) qui produisent dans leur effet cumulé la puissance réfractive nécessaire à chaque emplacement.

13. Feu de signalisation selon une ou plusieurs des revendications 1 à 12, **caractérisé en ce que** l'action de distribution de la lumière de la lentille divergente (10) est obtenue avec une structure de lentille convergente (10a) qui est disposée sur un disque support (T) et est constituée d'éléments de surface similaires ayant la même caractéristique de guidage de lumière, dans une disposition régulière sans interstices.

14. Feu de signalisation selon la revendication 13, **caractérisé en ce que** la disposition des éléments de surface de la structure de lentille divergente (10a) s'effectue selon une trame rectangulaire, carrée ou hexagonale.

15. Feu de signalisation selon une ou plusieurs des revendications 1 à 12, **caractérisé en ce que** la fonction de la lentille divergente (10) est obtenue avec plusieurs structures de lentille divergente (10a) qui produisent dans leur effet cumulé une distribution de lumière prédéfinie dans la zone d'observation (B).

16. Feu de signalisation selon une ou plusieurs des revendications 12 à 15, **caractérisé en ce qu'**une structure divergente (10a) est superposée géométriquement à une structure de lentille convergente (9).

17. Feu de signalisation selon une ou plusieurs des revendications 1 à 16, **caractérisé en ce que** l'optique de sortie (A) est constituée d'un seul disque support (T) ou est assemblée à partir de plusieurs disques supports (T) dont les surfaces d'entrée et de sortie sont pourvues des structures de lentille convergente (9b) et de lentille divergente (10a), et la surface de sortie (10b) est de préférence lisse ou présente une surface de forme régulière facile à nettoyer.

18. Feu de signalisation selon la revendication 17, **caractérisé en ce que** l'optique de sortie (A) présente une lentille convergente (9) séparée dotée d'une surface lisse à l'intérieur et d'une structure de lentille convergente (9b) située à l'extérieur, et, à la suite, une lentille divergente (10) dotée d'une surface de sortie (10b) lisse à l'extérieur et d'une structure de lentille divergente (10a) située à l'intérieur.

19. Feu de signalisation selon la revendication 17, **caractérisé en ce que** l'optique de sortie (A) est constituée d'un disque support (T) unique qui présente à l'intérieur la structure de lentille convergente (9b), à laquelle est superposée la structure divergente (10c), et qui est lisse à l'extérieur.

20. Feu de signalisation selon une ou plusieurs des revendications 1 à 19, **caractérisé en ce qu'**une vitre en verre facilement remplaçable et ayant le même angle d'inclinaison (α) est disposée en tant que protection contre les rayures et les dépôts devant l'optique de sortie (A), ou que la surface de sortie (10b) présente un revêtement de protection contre des rayures et des dépôts.

21. Feu de signalisation selon une ou plusieurs des revendications 17 à 20, **caractérisé en ce que** les disques supports (T) de l'optique de sortie (A) forment un système modulaire avec des structures de lentille convergente (9b) ou des structures de lentille divergente (10a) disposées sur une face ou sur les deux faces.

22. Feu de signalisation selon une ou plusieurs des revendications 1 à 21, **caractérisé en ce que** la lentille LED (3), placée directement devant la source lumineuse à LED (2), présente une entrée de lumière LED (3a), de préférence plane, et une surface de forme libre (3b) en tant que sortie de lumière.

23. Feu de signalisation selon une ou plusieurs des revendications 1 à 22, **caractérisé en ce que** la source lumineuse à LED (2), avec la lentille LED (3) placée directement devant, crée une évolution de la distribution de lumière et de l'intensité qui éclaire avec une luminosité uniforme l'ensemble de l'optique de sortie (A).

24. Feu de signalisation selon une ou plusieurs des revendications 1 à 23, **caractérisé en ce qu'**il est prévu pour chaque LED (2), une lentille LED (3) qui est délimitée sur les deux côtés par des surfaces limites (3h) qui, par réflexion totale des rayons lumineux LED (12) qui les frappent, conjointement avec les rayons lumineux LED directement traversants, créent une distribution de rayons lumineux (12a) équivalente à celle d'une lentille LED pleine.

25. Feu de signalisation selon la revendication 24, **caractérisé en ce que** plusieurs lentilles LED (3) à délimitation latérale sont reliées entre elles par leurs surfaces de contact (3i), pour former un seul composant.

26. Feu de signalisation selon une ou plusieurs des revendications 1 à 25, **caractérisé en ce que** les intensités des rayons lumineux (12a) sortant de la lentille LED (3) sont sensiblement proportionnelles au produit du carré de la distance jusqu'à leurs points d'incidence sur la surface d'entrée (9a), déformée en biais, sous l'angle d'inclinaison (α), de l'optique de sortie (A) et la valeur réciproque du cosinus des angles d'incidence des rayons lumineux au même endroit.

27. Feu de signalisation selon une ou plusieurs des revendications 21 à 26, **caractérisé en ce que** la surface d'entrée de lumière (3a) de la lentille LED (3) se termine horizontalement directement avec le bord inférieur de l'agencement de LED, ou qu'une zone absorbant la lumière se raccorde à cet endroit.

28. Feu de signalisation selon une ou plusieurs des revendications 21 à 27, **caractérisé en ce qu'**au moins la surface située en dessous de la zone d'entrée de lumière LED (3a) et, de manière facultative, la surface enveloppe (3d) de la lentille LED (3) comportent un revêtement noir mat et absorbant la lumière, ou que ces surfaces sont reliées optiquement à une surface absorbant la lumière d'un composant évacuant la chaleur.

29. Feu de signalisation selon une ou plusieurs des revendications 21 à 27, **caractérisé en ce que**, dans sa partie inférieure entre la surface d'entrée de lumière (3a) et la surface de sortie de la lentille (3b), la surface enveloppe (3d) de la lentille LED (3) présente un biseau (3f) qui dirige les rayons solaires incidents hors de la lentille LED (3), par réflexion totale.

30. Feu de signalisation selon une ou plusieurs des revendications 1 à 29, **caractérisé en ce que** la source lumineuse à LED (2), y compris la lentille LED (3) et un axe lumineux (L) à attribuer à la lentille LED (3), ainsi que le foyer (F) sont pivotés autour du centre de l'optique de sortie (A) pour se situer dans la partie supérieure du feu de signalisation, et la source lumineuse à LED (2) est appliquée de façon thermiquement conductrice directement contre le corps de refroidissement (5) formant la face arrière du feu de signalisation.

31. Feu de signalisation selon la revendication 30, **caractérisé en ce que**, dans l'espace libre situé en dessous de la source lumineuse à LED (2) et de la lentille LED (3), est logée l'électronique de commande (6) qui est protégée des rayons du soleil par un recouvrement (1c) conducteur de chaleur et absorbant la lumière.

32. Feu de signalisation selon une ou plusieurs des revendications 21 à 31, **caractérisé en ce qu'**il est prévu à proximité de la source lumineuse à LED (2), des capteurs optiques (2b, 2c) qui, du fait de leurs positions et de la disposition de fenêtres (3g) dans la surface d'entrée (3a) ou la surface enveloppe (3d) de la lentille LED (3), sont éclairés soit par des rayons solaires réfléchis sur des surfaces de lentille LED soit par des rayons lumineux de LED réfléchis sur des surfaces de lentille LED.

33. Feu de signalisation selon une ou plusieurs des revendications 1 à 32, **caractérisé en ce que** la lentille LED (3) ou une partie formant lentille de l'optique de sortie (A) est réalisée à partir d'un matériau transparent teinté dans la couleur de la lumière de la LED, ou à partir d'un matériau transparent teinté en gris neutre.

34. Feu de signalisation selon une ou plusieurs des revendications 1 à 33, **caractérisé en ce que** la source lumineuse à LED (2) est constituée de LED de couleurs différentes ou de LED de couleurs combinées, dans une disposition dense, les LED de même couleur pouvant être commandées chaque fois séparément.

35. Feu de signalisation selon une ou plusieurs des revendications 1 à 34, **caractérisé en ce que** la source lumineuse à LED (2) est réalisée en technologie COB.

36. Feu de signalisation selon une ou plusieurs des revendications 1 à 35, **caractérisé en ce qu'**un chauffage (15) à activation et réglage électriques est disposé à l'intérieur du boîtier (1), à l'extérieur du cône lumineux, dans la partie de boîtier faisant saillie vers l'avant.

37. Feu de signalisation selon la revendication 36, **caractérisé en ce que** le chauffage (15) est réalisé sous forme de tige chauffante, de fil chauffant, de film chauffant, de résistances de puissance sur une platine ou sous forme d'émetteur infrarouge.
